(19) Europäisches Patentamt
European Patent Office
Office européen des brevets

(11) EP 4 786 656 A1

(12) **EUROPEAN PATENT APPLICATION**
published in accordance with Art. 153(4) EPC

(43) Date of publication:
**05.08.2026 Bulletin 2026/32**

(21) Application number: **24872178.9**

(22) Date of filing: **24.09.2024**

(51) International Patent Classification (IPC):
***C25B 13/08*** (2006.01) ***C08F 12/34*** (2006.01)
***C08F 18/00*** (2006.01) ***C08F 20/18*** (2006.01)
***C08G 59/02*** (2006.01) ***C25B 1/04*** (2021.01)
***C25B 9/00*** (2021.01) ***C25B 9/23*** (2021.01)
***C25B 13/04*** (2021.01) ***H01M 8/103*** (2016.01)
***H01M 8/1018*** (2016.01) ***H01M 8/1025*** (2016.01)
***H01M 8/1058*** (2016.01) ***H01M 8/1062*** (2016.01)

(52) Cooperative Patent Classification (CPC):
**C08F 12/34; C08F 18/00; C08F 20/18; C08G 59/02; C25B 1/04; C25B 9/00; C25B 9/23; C25B 13/04; C25B 13/08; H01M 8/1018; H01M 8/1025; H01M 8/103; H01M 8/1058; H01M 8/1062**

(86) International application number:
**PCT/JP2024/033928**

(87) International publication number:
**WO 2025/070387 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 JP 2023161729**

(71) Applicant: **FUJIFILM Corporation**
**Tokyo 106-8620 (JP)**

(72) Inventors:
- **YAWATA, Toshihiko**
**Minamiashigara-shi, Kanagawa 250-0193 (JP)**
- **OZAWA, Shin**
**Minamiashigara-shi, Kanagawa 250-0193 (JP)**

(74) Representative: **HGF**
**HGF Limited**
**4th Floor, 1 City Square**
**Leeds LS1 2ES (GB)**

# (54) HYDROXY ION CONDUCTIVE MEMBRANE, METHOD FOR PRODUCING HYDROXY ION CONDUCTIVE MEMBRANE, MEMBRANE ELECTRODE ASSEMBLY, HYDROGEN PRODUCTION METHOD, AND HYDROGEN PRODUCTION SYSTEM

(57) Provided are a hydroxide ion-conductive membrane including a porous substrate and a hydroxide ion-conductive polymer disposed at least in pores of the porous substrate and having a thickness of the hydroxide ion-conductive membrane of 5 μm or more and less than 50 μm, in which the polymer has 50% by mole or more of a constituent component (I) derived from a polyfunctional polymerizable monomer having a total of two or more atoms of at least one of an oxygen atom, a sulfur atom, or a nitrogen atom in a structural moiety other than a polymerizable group in constituent components of the polymer, and a method for producing the hydroxide ion-conductive membrane, and a membrane electrode assembly, and a method for producing hydrogen and a hydrogen production system, each using the membrane electrode assembly.

FIG. 1

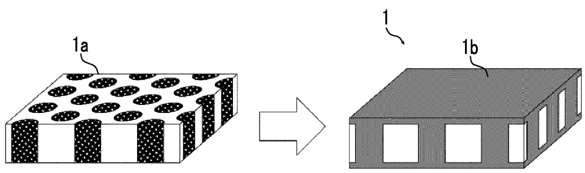


EP 4 786 656 A1

## Description

### BACKGROUND OF THE INVENTION

1. Field of the Invention

The present invention relates to a hydroxide ion-conductive membrane, a method for producing a hydroxide ion-conductive membrane, a membrane electrode assembly, a method for producing hydrogen, and a hydrogen production system.

2. Description of the Related Art

Hydrogen is a clean energy that does not emit carbon dioxide, and is used, for example, as a fuel for a fuel cell vehicle or a home fuel cell. As a method for producing hydrogen, electrolysis of water (water electrolysis) is known. In a case where water electrolysis is performed using, as a power source, a power generation system that uses renewable energy, hydrogen can be produced without emitting carbon dioxide, whereby hydrogen has been attracting increasing attention as a fundamental energy source for a sustainable society.

As an electrolysis technology that has been put into practical use, alkaline water electrolysis (AWE) using a high concentration of an alkali aqueous solution as an electrolyte is known. In the alkaline water electrolysis, a separator (diaphragm) having gas barrier properties is disposed between the cathode and the anode to prevent the bubble-like hydrogen ($2H_2O + 2e^- \rightarrow H_2 + 2OH^-$) generated at the cathode from moving to the anode side and to prevent the bubble-like oxygen ($4OH^- \rightarrow O_2 + 2H_2O + 4e^-$) generated at the anode from moving to the cathode side. As the separator, an anion exchange membrane-type water electrolysis (AEMWE) using an anion exchange membrane that enhances conduction (movement) of $OH^-$ (hydroxide ion) from the cathode side to the anode side has also been proposed. In the AEMWE, hydroxide ions can be conducted with high efficiency from the cathode side to the anode side even without using a high concentration of an alkali aqueous solution as an electrolyte.

The electrode (anode catalyst layer and cathode catalyst layer) of the AEMWE is generally formed by mixing a catalyst in which a noble metal, a metal oxide, or the like is carried on a carrier such as carbon as necessary, an ionomer that functions as a binder and also functions as an ion conductor, and a liquid medium, applying the mixture onto a conductive substrate having gas permeability and electron conductivity, and drying the coating film to remove the liquid medium. Next, the anion exchange membrane (hydroxide ion-conductive membrane) is interposed between the formed anode catalyst layer and the formed cathode catalyst layer, and the anion exchange membrane is joined to the anode catalyst layer and the cathode catalyst layer by thermocompression bonding in a pressurized state to obtain a membrane electrode assembly (MEA) for AEMWE. For example, JP2023-104047A describes the following membrane electrode assembly.

A membrane electrode assembly used in a water electrolysis apparatus, the membrane electrode assembly including electrolyte membrane consisting of an anion exchange membrane, catalyst layers disposed on both the electrolyte membrane, and conductive substrates each laminated on a surface of the catalyst layer opposite to the surface facing the electrolyte layer, in which the catalyst layer includes a catalyst and an anionic ionomer, at least a part of the anionic ionomer is in contact with the electrolyte membrane in a state of having penetrated into the electrolyte membrane, and the membrane electrode assembly has a mixed region in which the anionic ionomer and the electrolyte membrane are mixed in the vicinity of a boundary between the catalyst layer and the electrolyte membrane.

According to the technology disclosed in JP2023-104047A, the adhesion between the electrolyte membrane and the catalyst layer is increased, and the movement resistance of hydroxide ions at the interface between the electrolyte membrane and the catalyst layer can be reduced, and as a result, it is considered that the resistance of the membrane electrode assembly can be reduced.

### SUMMARY OF THE INVENTION

To realize the low resistance (high hydroxide ion permeability) of the MEA, it is considered to minimize the distance between the cathode and the anode in addition to increasing the hydroxide ion conductivity as the original material properties of the hydroxide ion-conductive membrane. However, to reduce the distance between the cathode and the anode, it is necessary to reduce the thickness of the hydroxide ion-conductive membrane, and as a result, the mechanical strength of the hydroxide ion-conductive membrane is reduced, and in a case where the hydroxide ion-conductive membrane is pressurized together with a catalyst layer or a gas diffusion layer, each having slight unevenness, voids or minute holes are formed, and unexpected gas flow, water flow, or poor contact of the catalyst layer is likely to occur. Therefore, the hydroxide ion-conductive membrane is required to have sufficient mechanical strength even in case of being formed to be thin. In addition, as a basic characteristic of the hydroxide ion-conductive membrane as a diaphragm,

even in a case where the hydroxide ion-conductive membrane is formed to be thin as described above, low gas permeability is required.

In addition, a solar power generation system that is widely used as a power generation system using renewable energy operates during the day and does not operate at night when the sun sets. That is, in a case where water electrolysis is performed using the solar power generation system as a power source, a time period during which power is supplied and a time period during which power is not supplied occur. In addition, the amount of supplied power increases or decreases depending on the weather even during the time period during which power is supplied. This tendency for the output to fluctuate is also common, to a considerable extent, to other power generation systems using renewable energy. Therefore, in a case where water electrolysis is performed using, as a power source, a power generation system using renewable energy, it is necessary to increase or decrease the amount of water to be supplied in accordance with the amount of supplied power, or to stop the supply of water during the time period during which power is not supplied. Therefore, the MEA is also required to have a characteristic of being able to sufficiently maintain the low resistance even in a case where the supply power or the amount of water supplied fluctuates.

An object of the present invention is to provide a hydroxide ion-conductive membrane having excellent hydroxide ion conductivity, excellent mechanical strength while being a thin membrane, and sufficiently low air permeability, and a method for producing the hydroxide ion-conductive membrane, in which an MEA formed by interposing the hydroxide ion-conductive membrane between a cathode and an anode can sufficiently maintain low resistance even in a case where on/off switching of energization or liquid supply is repeated. In addition, another object of the present invention is to provide a membrane electrode assembly in which a hydroxide ion-conductive membrane interposed between a cathode and an anode has excellent hydroxide ion conductivity, the hydroxide ion-conductive membrane has excellent mechanical strength while being a thin membrane, and the membrane electrode assembly can sufficiently maintain low resistance even in a case where on/off switching of energization or liquid supply is repeated, and a method for producing hydrogen and a hydrogen production system, each using the membrane electrode assembly.

The above-described problems of the invention were solved by the following means.

[1] A hydroxide ion-conductive membrane comprising: a porous substrate; and a hydroxide ion-conductive polymer disposed at least in pores of the porous substrate, in which the hydroxide ion-conductive polymer has a constituent component (I) derived from a polyfunctional polymerizable monomer having a total of two or more atoms of at least one of an oxygen atom, a sulfur atom, or a nitrogen atom in a structural moiety other than a polymerizable group, and a proportion of the constituent component (I) in all constituent components of the hydroxide ion-conductive polymer is 50% by mole or more, and a thickness of the hydroxide ion-conductive membrane is 5 μm or more and less than 50 μm.

[2] The hydroxide ion-conductive membrane according to [1], in which an element composition in the hydroxide ion-conductive polymer satisfies the following expression (a),

[total element concentrations (at%) of oxygen element, sulfur element, and nitrogen element]/[carbon element concentration (at%)] $\geq$ 0.05. [expression (a)]

[3] The hydroxide ion-conductive membrane according to [1] or [2], in which a water retention capacity of the hydroxide ion-conductive polymer is 5% by mass or more.

[4] The hydroxide ion-conductive membrane according to any one of [1] to [3], in which the constituent component (I) has any one of the following structural moieties (i) to (viii),

(i)

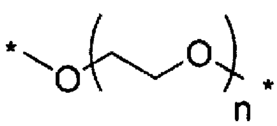

(ii)

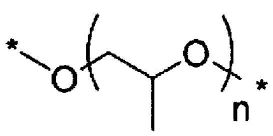

(iii)

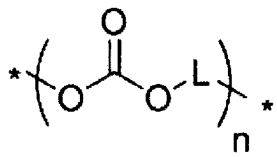

(iv)

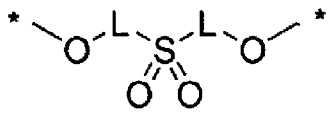

(v)

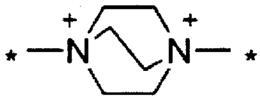

(vi)

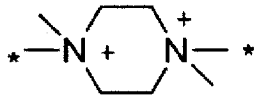

(vii)

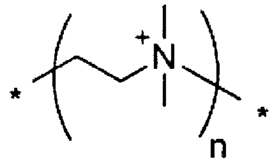

(viii)

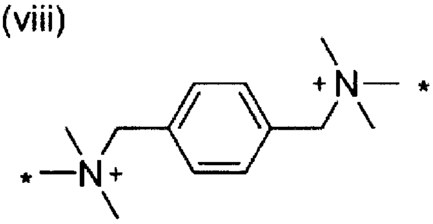

n is an integer of 1 or more,
L represents a single bond, an alkylene group, or an arylene group, and
* indicates a linking site.

[5] The hydroxide ion-conductive membrane according to any one of [1] to [4], in which the constituent component (I) is a nonionic constituent component.
[6] The hydroxide ion-conductive membrane according to any one of [1] to [5], in which the hydroxide ion-conductive membrane has a tensile strength of 10 MPa or more and a breaking elongation of 100% or more.
[7] The hydroxide ion-conductive membrane according to any one of [1] to [6], in which the hydroxide ion-conductive membrane has an air permeability of 1,000 seconds or more.
[8] The hydroxide ion-conductive membrane according to any one of [1] to [7], in which the porous substrate has a porosity of 40% to 60%.
[9] The hydroxide ion-conductive membrane according to any one of [1] to [8], in which the porous substrate has a tensile strength of 20 MPa or more and a breaking elongation of 100% or more.
[10] The hydroxide ion-conductive membrane according to any one of [1] to [9], in which a constituent material of the porous substrate includes a hydrocarbon polymer.
[11] A method for producing a hydroxide ion-conductive membrane, the method comprising: impregnating a porous substrate with a polymerizable monomer-containing liquid containing 50% by mole or more of a polyfunctional polymerizable monomer having a total of two or more atoms of at least one of an oxygen atom, a sulfur atom, or a nitrogen atom in a structural moiety other than a polymerizable group in all monomers; and subjecting the polyfunctional polymerizable monomer to a polymerization reaction to obtain a hydroxide ion-conductive membrane having a thickness of 5 $\mu$m or more and less than 50 $\mu$m.
[12] The method for producing a hydroxide ion-conductive membrane according to [11], in which a solids content of the polymerizable monomer-containing liquid is 30% by mass or more.
[13] The method for producing a hydroxide ion-conductive membrane according to [11] or [12], in which the porous substrate is surface-modified by corona treatment or plasma treatment.
[14] A membrane electrode assembly having a structure in which a cathode catalyst layer, the hydroxide ion-conductive membrane according to any one of [1] to [10], and an anode catalyst layer are laminated in this order.
[15] A method for producing hydrogen using the membrane electrode assembly according to [14].
[16] A hydrogen production system comprising: the membrane electrode assembly according to [14].

The hydroxide ion-conductive membrane according to an aspect of the present invention has excellent hydroxide ion conductivity, excellent mechanical strength while being a thin membrane, and sufficiently low air permeability. The

MEA formed by interposing the hydroxide ion-conductive membrane between a cathode and an anode can sufficiently maintain low resistance even in a case where on/off switching of energization or liquid supply is repeated. According to the method for producing a hydroxide ion-conductive membrane according to an aspect of the present invention, a hydroxide ion-conductive membrane having excellent hydroxide ion conductivity, excellent mechanical strength while being a thin membrane, and sufficiently low air permeability can be obtained. In the membrane electrode assembly according to an aspect of the present invention, a hydroxide ion-conductive membrane interposed between a cathode and an anode has excellent hydroxide ion conductivity, the hydroxide ion-conductive membrane has excellent mechanical strength while being a thin membrane, and the membrane electrode assembly can sufficiently maintain low resistance even in a case where on/off switching of energization or liquid supply is repeated. In the method for producing hydrogen and the hydrogen production system according to an aspect of the present invention, since the hydroxide ion-conductive membrane used and the membrane electrode assembly used have the above-described characteristics, hydrogen can be produced while sufficiently maintaining a low resistance even in a case where on/off switching of energization or liquid supply is repeated.

## BRIEF DESCRIPTION OF THE DRAWINGS

FIG. 1 is a schematic view showing an outline of an embodiment of a method for producing a hydroxide ion-conductive membrane.

FIG. 2 is a longitudinal cross-sectional view schematically showing a basic laminated configuration of an embodiment of a membrane electrode assembly according to the present invention.

## DESCRIPTION OF THE PREFERRED EMBODIMENTS

[Hydroxide ion-conductive membrane]

The hydroxide ion-conductive membrane according to the embodiment of the present invention can be widely used as a hydroxide ion-conductive membrane in water electrolysis, a fuel cell, electrolytic reduction of toluene, carbon dioxide reduction, and the like.

Among these, the hydroxide ion-conductive membrane according to the embodiment of the present invention is suitable as a diaphragm that separates an anode and a cathode in water electrolysis. The hydroxide ion-conductive membrane according to an aspect of the present invention has hydroxide ion conductivity, excellent mechanical strength while being a thin membrane, and sufficiently low air permeability.

In the present invention, the term "having hydroxide ion conductivity" means that an ion conductivity obtained by the following method is 0.1 mS/cm or more.

-Ion conductivity-

A striped test piece of 10 mm × 50 mm is sandwiched in BT-115 of Electro Chem Co., Ltd. or a jig (attachment with electrode) described in Electrochemistry, 85, 40, and an alternating current impedance measurement is performed by a four-terminal method. The alternating current impedance measurement is performed in a 1 M KOH aqueous solution heated to 45°C, with a voltage of 10 mV and a frequency in a range of 1 MHz to 0.1 Hz. A value of an intercept on the real axis in a case of obtaining a Nyquist plot (an extrapolated value may be used) is defined as a resistance value R of the test piece, and the ion conductivity $\sigma$ is calculated from the following expression.

$$\text{Ion conductivity } \sigma \text{ (S/cm)} = \text{D (cm)}/(\text{W (cm)} \times \text{T (cm)} \times \text{resistance value R } (\Omega))$$

D: length (cm) of test piece
W: width (cm) of test piece
T: thickness (cm) of test piece

The hydroxide ion conductivity of the hydroxide ion-conductive membrane according to the embodiment of the present invention is preferably 0.1 mS/cm to 10 S/cm, more preferably 10 mS/cm to 1 S/cm, and still more preferably 10 mS/cm to 500 mS/cm.

The hydroxide ion-conductive membrane according to the embodiment of the present invention has a porous substrate and a hydroxide ion-conductive polymer disposed at least in a pore of the porous substrate. The hydroxide ion-conductive polymer may be disposed at least in the pore of the porous substrate, and the hydroxide ion-conductive

polymer may be disposed in a portion of the porous substrate other than the pore in addition to the pore of the porous substrate. For example, the hydroxide ion-conductive polymer may cover a surface of the porous substrate.

<hydroxide ion-conductive polymer>

The hydroxide ion-conductive polymer has a specific amount of a constituent component having a specific structure. Specifically, a constituent component (I) derived from a polyfunctional polymerizable monomer (hereinafter, also simply referred to as a "polyfunctional polymerizable monomer IA") having a total of two or more atoms of at least one of an oxygen atom, a sulfur atom, or a nitrogen atom (hereinafter, also collectively referred to as "heteroatoms") in a structural moiety other than a polymerizable group is contained in an amount of 50% by mole or more in all constituent components of the polymer. That is, the hydroxide ion-conductive polymer is a polymer obtained by polymerizing a polymerizable monomer-containing liquid containing 50% by mole or more of the polyfunctional polymerizable monomer IA in all monomers. A three-dimensional mesh structure is formed by the polymerization to generate the hydroxide ion-conductive polymer.

In the hydroxide ion-conductive polymer having the constituent component (I), since a structural moiety having the above-described heteroatom can effectively increase the polarity of the polymer, the polymer can stably retain a large amount of moisture, thereby exhibiting excellent hydroxide ion conductivity.

The hydroxide ion-conductive polymer has an element composition preferably satisfying the following expression (a), more preferably satisfying the following expression (a-1), still more preferably satisfying the following expression (a-2), and even more preferably satisfying the following expression (a-3). By increasing the ratio of the heteroatom, higher hydroxide ion conductivity can be imparted to the hydroxide ion-conductive polymer or the hydroxide ion-conductive membrane containing the polymer.

[Total element concentrations (at%) of oxygen element, sulfur element, and nitrogen element]/[carbon element concentration (at%)] $\geq$ 0.05 [expression (a)]

50.00 $\geq$ [Total element concentrations (at%) of oxygen element, sulfur element, and nitrogen element]/[carbon element concentration (at%)] $\geq$ 0.06 [Formula (a-1)]

40.00 $\geq$ [Total element concentrations (at%) of oxygen element, sulfur element, and nitrogen element]/[carbon element concentration (at%)] $\geq$ 0.07 [Formula (a-2)]

38.00 $\geq$ [Total element concentrations (at%) of oxygen element, sulfur element, and nitrogen element]/[carbon element concentration (at%)] $\geq$ 0.08 [Formula (a-3)]

The element concentration (at%) of each element means an element concentration of each element in a total of 100 at% of element concentrations of all elements in the hydroxide ion-conductive polymer.

The concentration (at%) of each element contained in the hydroxide ion-conductive polymer can be measured using an organic element analyzer.

The polyfunctional polymerizable monomer IA from which the constituent component (I) is derived will be described.

In the present invention, the term "polyfunctional polymerizable monomer" means a monomer having two or more polymerizable groups in one molecule. That is, the term "polyfunctional" means having two or more polymerizable groups in one molecule.

In a case where the polymerizable group is a chain-polymerizable group, the polyfunctional polymerizable monomer IA is preferably a 2- to 6-valent polyfunctional polymerizable monomer (that is, a monomer having two to six chain-polymerizable groups in one molecule), and preferably a 2- to 4-valent polyfunctional polymerizable monomer.

In a case where the polymerizable group is a stepwise-polymerizable group, the polyfunctional polymerizable monomer IA is preferably a 2- to 6-valent polyfunctional polymerizable monomer (that is, a monomer having two to six stepwise polymerizable groups in one molecule), preferably a 2- to 5-valent polyfunctional polymerizable monomer, preferably a 2- to 4-valent polyfunctional polymerizable monomer, and more preferably a 2- to 3-valent polyfunctional polymerizable monomer.

By using the polyfunctional polymerizable monomer, a crosslinking structure is likely to be formed in a large amount in the obtained polymer as compared with a case of using a monofunctional polymerizable monomer, and a dense membrane can be formed.

The polymerizable group included in the polyfunctional polymerizable monomer IA is not particularly limited as

long as it can cause a polymerization reaction, and examples thereof include a chain-polymerizable group (for example, a group having a carbon-carbon double bond such as a vinyl group ($CH_2$=CH-), a vinyl ether group ($CH_2$=CH-O-), a vinylthioether group ($CH_2$=CH-S-), an acryloyl group ($CH_2$=CH-C(=O)-), a methacryloyl group ($CH_2$=C($CH_3$)-C(=O)-), or a derivative thereof; an epoxy group (oxiranyl group), a cyclic ether group such as an oxetanyl group), and as a group capable of stepwise polymerization, a group causing polycondensation or polyaddition (a hydroxy group, an unsubstituted amino group, a carboxy group, a sulfo group, an isocyanate group, an acid anhydride group, and the like).

It is preferable that the polyfunctional polymerizable monomer IA has two or more chain-polymerizable groups. In addition, the polyfunctional polymerizable monomer IA may have both the chain-polymerizable group and the stepwise-polymerizable group. In addition, it is also preferable that the polyfunctional polymerizable monomer IA has two or more chain-polymerizable groups and does not have a stepwise-polymerizable group.

It is noted that in the present invention, the term "stepwise-polymerizable group" means a group that reacts with another group in a polymerization reaction condition of the polyfunctional polymerizable monomer IA for obtaining the hydroxide ion-conductive polymer to cause stepwise polymerization. That is, in the polymerization reaction condition, for example, in a case where the above-described "other group" does not exist and stepwise polymerization cannot occur (that is, in a case where the group remains as an unreacted group in the obtained hydroxide ion-conductive polymer), even in a case where the polyfunctional polymerizable monomer IA has a group that is listed as a group capable of stepwise polymerization such as the hydroxy group, the unsubstituted amino group, the carboxy group, the sulfo group, the isocyanate group, and the acid anhydride group, these groups are not "stepwise-polymerizable groups". Even in a case where the group that is listed as a group capable of stepwise polymerization cannot cause stepwise polymerization under the above-described polymerization reaction condition, an oxygen atom, a nitrogen atom, and the like constituting these groups constitute a heteroatom present in a structural moiety of the polyfunctional polymerizable monomer IA other than the polymerizable group.

The above-described "polymerizable group" is preferably a group selected from a vinyl group, a vinyl ether group, a vinylthioether group, an acryloyl group, a methacryloyl group, an epoxy group, or an oxetanyl group, and more preferably a group selected from a vinyl group, an acryloyl group, a methacryloyl group, or an epoxy group. It is noted that in a case where the polyfunctional polymerizable monomer IA has a styryl group, the above-described "polymerizable group" is a vinyl group. That is, a benzene ring constituting the styryl group constitutes a "structural moiety other than polymerizable group" defined in the present invention. Similarly, in a group having a vinyl group and other than a vinyl ether group, a vinylthioether group, an acryloyl group, and a methacryloyl group, the vinyl group corresponds to the polymerizable group, and a portion other than the vinyl group is regards as constituting the "structural moiety other than polymerizable group" defined in the present invention.

On the other hand, in the present invention, an ether group (-O-) included in the vinyl ether group which is a chain-polymerizable group, a thioether group (-S-) included in the vinylthioether group, a carbonyl group (-C(=O)-) included in the acryloyl group and the methacryloyl group, and each heteroatom included in the hydroxy group, the amino group, the carboxy group, the isocyanate group, the sulfo group, and the acid anhydride, which are stepwise-polymerizable groups, are all regarded as a part of the structure of the "polymerizable group" contained in the polyfunctional polymerizable monomer IA. Therefore, the above-described heteroatom constituting these polymerizable groups is not an atom constituting a "structural moiety other than polymerizable group" defined in the present invention.

As described above, the polyfunctional polymerizable monomer IA has a total of two or more atoms of at least one of an oxygen atom, a sulfur atom, or a nitrogen atom in a structural moiety other than a polymerizable group (that is, the total number of oxygen atoms, sulfur atoms, and nitrogen atoms included in the structural moiety other than the polymerizable group is two or more). A combinations of these atoms are not particularly limited, and a structure may be such that a structural moiety other than a polymerizable group has two or more oxygen atoms and has no sulfur atoms or nitrogen atoms, such that a structural moiety other than the polymerizable group has two or more sulfur atoms and has no oxygen atoms or nitrogen atoms, or such that a structural moiety other than the polymerizable group has two or more nitrogen atoms and has no oxygen atoms or sulfur atoms. In addition, two or more heteroatoms of two or more different types may be present in combination (for example, a structure may have one sulfur atom and one oxygen atom).

The total number of oxygen atoms, sulfur atoms, and nitrogen atoms included in the structural moiety other than the polymerizable group of the polyfunctional polymerizable monomer IA depends on the size of the structural moiety other than the polymerizable group, but is preferably 2 to 160, more preferably 2 to 140, still more preferably 4 to 100, even more preferably 6 to 80, and particularly preferably 6 to 60. In addition, the total number of oxygen atoms, sulfur atoms, and nitrogen atoms included in the structural moiety other than the polymerizable group can be 10 to 60.

The structural moiety other than the polymerizable group of the polyfunctional polymerizable monomer IA usually has an atom other than an oxygen atom, a sulfur atom, and a nitrogen atom. The atom other than the oxygen atom, the sulfur atom, and the nitrogen atom included in the structural moiety is not particularly limited. The atom other than the oxygen atom, the sulfur atom, and the nitrogen atom included in the structural moiety is typically a carbon atom and a hydrogen atom. In addition, in a case where the structural moiety has a cationic or anionic structure, an atom other than the oxygen atom, the sulfur atom, and the nitrogen atom can be used as a counterion. For example, in a case where the

structural moiety other than the polymerizable group of the polyfunctional polymerizable monomer IA has a cationic structure having a quaternary ammonium group, a halogen ion, a hydroxide ion, a carbonate ion, or the like can be used as a counterion.

It is preferable that the polyfunctional polymerizable monomer IA does not have a fluorine atom in the structure thereof. By not having a fluorine atom, it is possible to achieve both high anion conductivity and high gas barrier properties.

The structural moiety other than the polymerizable group of the polyfunctional polymerizable monomer IA may be linear, may have a branched structure, or may have a cyclic structure.

In the structural moiety other than the polymerizable group of the polyfunctional polymerizable monomer IA, the number of atoms constituting a shortest connecting structure that links two adjacent heteroatoms is preferably 6 or less, more preferably 5 or less, still more preferably 4 or less, and even more preferably 3 or less. For example, in the structures (i) and (ii) described later, the atom constituting the shortest connecting structure between two adjacent oxygen atoms is a carbon atom, and the number of atoms (number of carbon atoms) constituting the shortest connecting structure is 2. In addition, in the structure (iii), the atom constituting the shortest connecting structure between two adjacent oxygen atoms is a carbon atom, and the number of atoms (number of carbon atoms) constituting the shortest connecting structure is 1. In addition, in the structure (iv), in a case where L is a phenylene having two linking sites in a para relationship with each other, the atom constituting the shortest connecting structure between the adjacent sulfur atom and oxygen atom via the phenylene is a carbon atom, and the number of atoms (carbon atom number) constituting the shortest connecting structure is 4. In addition, in the structure (iv), since there is no atom between two adjacent heteroatoms in the $(-S(=O)_2-)$ structure, the number of atoms constituting the above-described "shortest connecting structure" in the $(-S(=O)_2-)$ structure is 0. In addition, in the structures (v) to (vii), the atom constituting the shortest connecting structure between two nitrogen atoms is a carbon atom, and the number of atoms (number of carbon atoms) constituting the shortest connecting structure is 2. In addition, in the structures (vii), the atom constituting the shortest connecting structure between two nitrogen atoms is a carbon atom, and the number of atoms (number of carbon atoms) constituting the shortest connecting structure is 6.

The structural moiety other than the polymerizable group of the polyfunctional polymerizable monomer IA has two or more groups selected from an oxygen atom, a sulfur atom, and a nitrogen atom to form a structure having high polarity. Specific examples of the structure having a total of two or more atoms of at least one of an oxygen atom, a sulfur atom, or a nitrogen atom in the structural moiety include a polyalkyleneoxy structure, a carbonate structure (-O-C(=O)-O-), a structure having one or more sulfonyl groups $(-S(=O)_2-)$, a structure in which a sulfonyl group $(-S(=O)_2-)$ and an ether group (-O-) are combined (for example, $-O-(CH_2)_2-S(=O)_2-(CH_2)_2-O-$), a structure having two or more imino groups (for example, a polyethyleneimine structure), a structure having two or more quaternary ammonium groups, and the like.

The polyfunctional polymerizable monomer IA has two or more groups selected from an oxygen atom, a sulfur atom, and a nitrogen atom in a structural moiety other than the polymerizable group to form a structure having high polarity, and the hydroxide ion-conductive polymer obtained by polymerizing the structure or the hydroxide ion-conductive membrane including the polymer can retain a larger amount of moisture and can have higher hydroxide ion conductivity.

In the polyfunctional polymerizable monomer IA, a chemical formula weight of the structural moiety other than the polymerizable group is preferably 30 to 4,000, more preferably 50 to 3,000, still more preferably 100 to 2,000, and particularly preferably 100 to 1,000. In the polyfunctional polymerizable monomer IA, a value obtained by dividing the "chemical formula weight of the structural moiety other than the polymerizable group" by the "total number of oxygen atoms, sulfur atoms, and nitrogen atoms included in the structural moiety other than the polymerizable group" (the "chemical formula weight of the structural moiety other than the polymerizable group"/the "total number of oxygen atoms, sulfur atoms, and nitrogen atoms included in the structural moiety other than the polymerizable group") is preferably 2 to 100, more preferably 2 to 80, still more preferably 4 to 60, and particularly preferably 5 to 50.

A molecular weight of the polyfunctional polymerizable monomer IA is preferably 150 to 5,000, more preferably 180 to 4,500, and still more preferably 200 to 3,000.

The polyfunctional polymerizable monomer IA can have, for example, at least any one of the following structural moietys (i) to (viii) in the structural moiety other than the polymerizable group.

(i)

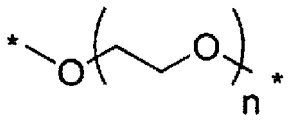

(ii)

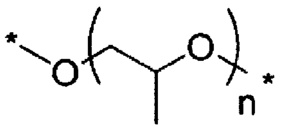

(iii)

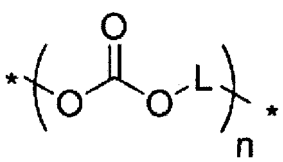

(iv)

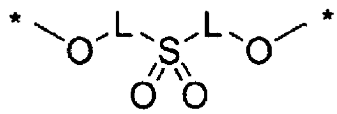

(v)

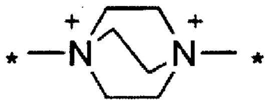

(vi)

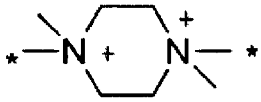

(vii)

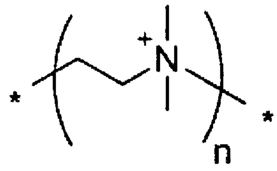

(viii)

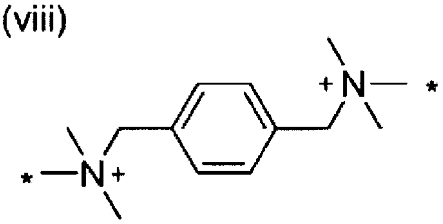

In the structural moieties (i) to (iii) and (vii), n is an integer of 1 or more, and is preferably 1 to 50, more preferably 2 to 35, still more preferably 3 to 30, even more preferably 4 to 25, even still more preferably 5 to 20, even still more preferably 5 to 15, and particularly preferably 5 to 10.

L represents a single bond, an alkylene group, or an arylene group. In a case where L represents an alkylene group, the number of carbon atoms in the alkylene group is preferably 1 to 10, more preferably 1 to 6, still more preferably 1 to 3, and even more preferably 1 or 2. In a case where L represents an arylene group, the number of carbon atoms in the arylene group is preferably 6 to 18, more preferably 6 to 14, and still more preferably 6 to 10. The arylene group is preferably a phenylene group.

**[0047]** * represents a linking site to another structure.

The structural moiety represented by Formula (iv) is preferably a structural moiety represented by Formula (ix), and is also preferably a structural moiety represented by Formula (x).

(ix)

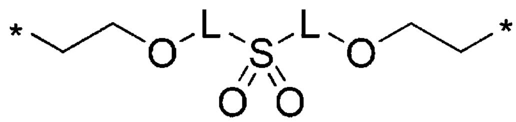

(x)

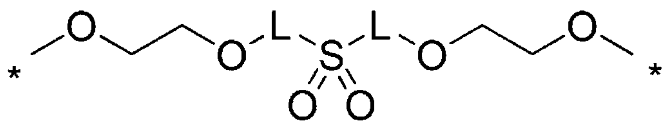

The constituent component (I) (constitutional unit derived from the polyfunctional polymerizable monomer IA) included in the hydroxide ion-conductive polymer is preferably a nonionic constituent component from the viewpoint of durability against high-temperature continuous operation under alkaline conditions. For example, the constituent component (I) preferably has at least any one of the above-described structural moieties (i) to (iv), and more preferably has the structural moiety (i) or (ii).

The hydroxide ion-conductive polymer can have one or two or more types of the constituent component (I). Here, the structural moiety (vii) has one nitrogen atom in the structure in parentheses, but in a case where the constituent

component (I) has only the structural moiety (vii), n in the structural moiety (vii) is an integer of 2 or more, and in a case where the constituent component (I) has any one of (i) to (vi) and (viii) in addition to the structural moiety (vii), n in the structural moiety (vii) is an integer of 1 or more.

Preferred specific examples of the polyfunctional polymerizable monomer IA are shown below. n is an integer of 1 or more. It is noted that in the preferred specific examples of the polyfunctional polymerizable monomer IA, the hydroxide ion may be a halogen ion (for example, a chloride ion or the like) or a carbonate ion.

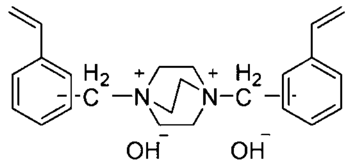
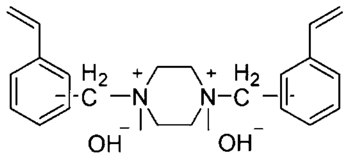
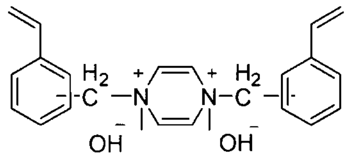

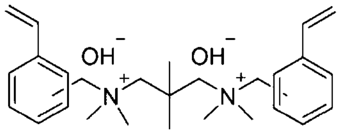
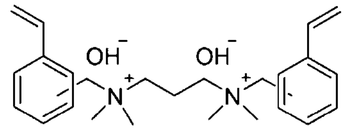
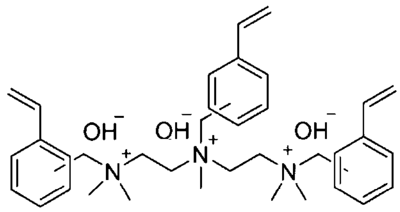

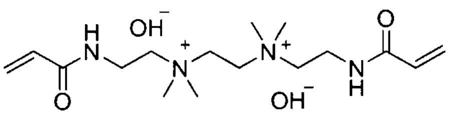
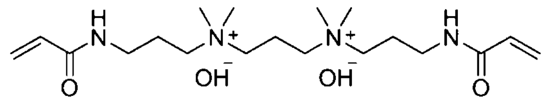

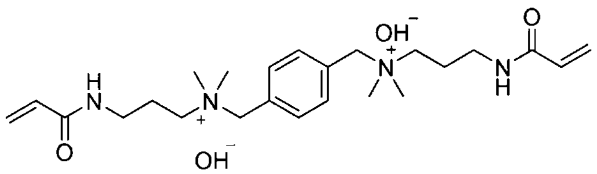

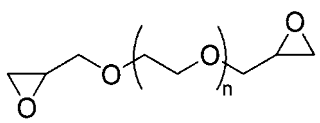
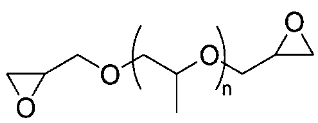
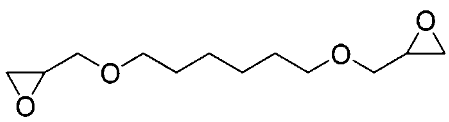

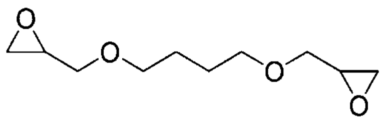
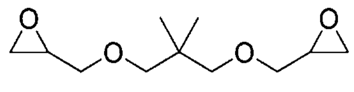
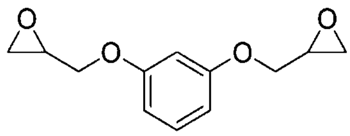

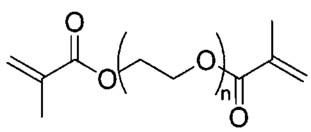
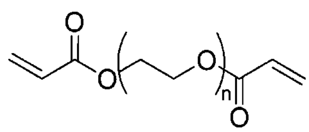
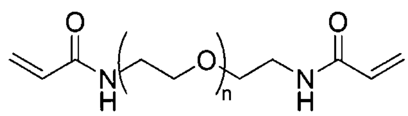

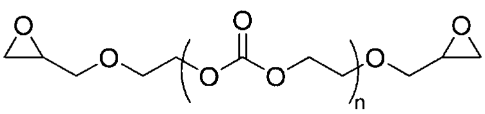
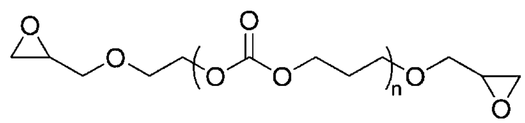

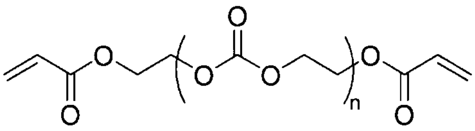

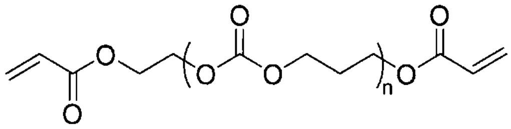

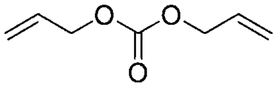

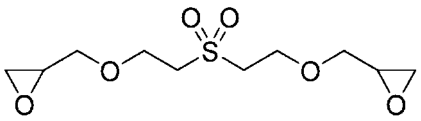

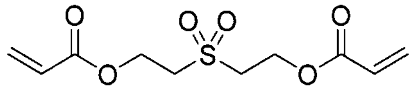

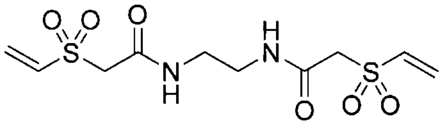

The hydroxide ion-conductive polymer may be a polymer consisting of the constituent component (I), or may contain a constituent component (II) derived from a monomer other than the polyfunctional polymerizable monomer IA in addition to the constituent component (I).

The constituent component (II) can be appropriately adopted without impairing the effects of the present invention. Examples of the constituent component (II) include a constituent component derived from a monofunctional or polyfunctional polymerizable monomer having one heteroatom in a structural moiety other than the polymerizable group, a constituent component derived from a monofunctional polymerizable monomer having a total of two or more of at least one heteroatom in a structural moiety other than the polymerizable group, and a constituent component derived from a monofunctional or polyfunctional polymerizable monomer having no heteroatoms in a structural moiety other than the polymerizable group, but the constituent component (II) is not limited thereto.

A polymerizable group that can be adopted by the polymerizable monomer from which the constituent component (II) is derived is the same as the polymerizable group included in the polyfunctional polymerizable monomer IA, and a preferred form of the polymerizable group is also the same. The polymerizable group that can be adopted by the polymerizable monomer from which the constituent component (II) is derived is a polymerizable group that can be subjected to a polymerization reaction with the polymerizable group included in the polyfunctional polymerizable monomer IA.

A molecular weight of the monomer from which the constituent component (II) is derived is preferably 80 to 1,000, more preferably 90 to 500, and still more preferably 100 to 300.

The constituent component (II) is preferably a structure having an aryl group, and the aryl group may further have a substituent. Among these, the constituent component (II) is preferably a structure having a benzene ring, and is more preferably a structure having one benzene ring.

The substituent is preferably a group having an ammonium group, a group having a primary to tertiary amine group, or the like.

A proportion of the constituent component (I) in all constituent components of the hydroxide ion-conductive polymer is 50% by mole or more. A proportion of the constituent component (I) in all the constituent components of the hydroxide ion-conductive polymer is preferably 60% by mole or more, more preferably 70% by mole or more, still more preferably 80% by mole or more, and may be 90% by mole or more or 95% by mole or more, and all the constituent components of the hydroxide ion-conductive polymer may be the constituent component (I). By increasing the proportion of the constituent component (I), the gas permeability can be further reduced.

The hydroxide ion-conductive polymer can retain a larger amount of moisture due to the structure having high polarity of the constituent component (I). The water retention capacity of the hydroxide ion-conductive polymer is preferably 5% by mass or more, more preferably 5% to 30% by mass, still more preferably 5% to 27% by mass, even more preferably 10% to 27% by mass, and particularly preferably 18% to 25% by mass.

The water retention capacity of the hydroxide ion-conductive polymer can be measured by the method described in Examples.

<Porous substrate>

The porous substrate is not particularly limited as long as it has a pore through which water and ions can permeate. It is preferable that the porous substrate has a large number of minute pores penetrating from a front surface to a back surface. For example, a porous substrate that can be used as a separator for water electrolysis can be used.

The porous substrate preferably includes a resin as a constituent material. As the constituent material of the porous substrate, for example, a hydrocarbon polymer (preferably a polyolefin, more preferably polyethylene, polypropylene, or the like), a fluoropolymer (polytetrafluoroethylene, or the like), polystyrene, cellulose, polyacrylonitrile, a ceramic, or the like can be used, and a hydrocarbon polymer is preferably used.

The porous substrate may be a substrate having a porous structure. For example, the porous substrate may be a membrane (porous membrane) in which a resin is formed into a film and stretched to form fine pores, may be a textile, or may be a nonwoven fabric.

In a case where the porous substrate is a porous membrane, the porous substrate may be manufactured by a dry method or may be manufactured by a wet method, and the porous substrate manufactured by the dry method is preferable. Here, the dry method is a method of forming a film from a melted resin, performing a heat treatment, and stretching the film to form fine pores, and the wet method is a method of melting a resin and a plasticizer (solvent), forming a film, stretching the film, and extracting the plasticizer to form fine pores.

In the present invention, the porous substrate is preferably a porous membrane made of polyethylene, a porous membrane made of polypropylene, a nonwoven fabric made of polyethylene, or a nonwoven fabric made of polytetrafluoroethylene, and more preferably a porous membrane made of polyethylene.

The thickness of the porous substrate only needs to be such that a hydroxide ion-conductive membrane having a thickness of 5 μm or more and less than 50 μm is obtained. Therefore, the thickness is preferably 5 μm or more and less than 50 μm, more preferably 6 μm or more and 40 μm or less, still more preferably 6 μm or more and 35 μm or less, even more preferably 7 μm or more and 30 μm or less, even still more preferably 7 μm or more and 25 μm or less, even still more preferably 7 μm or more and 20 μm or less, and particularly preferably 7 μm or more and 15 μm or less.

The thickness of the porous substrate is measured after drying the porous substrate.

The porosity of the porous substrate is preferably 20% to 80%, more preferably 25% to 70%, still more preferably 30% to 60%, even more preferably 35% to 60%, even still more preferably 37% to 55%, even still more preferably 38% to 50%, and particularly preferably 40% to 50%.

The porosity can be measured by the method described in Examples.

The tensile strength of the porous substrate is preferably 10 MPa or more, more preferably 20 MPa or more, and still more preferably 30 MPa or more. The tensile strength of the porous substrate is usually 400 MPa or less. Therefore, the tensile strength of the porous substrate is preferably 10 to 400 MPa, more preferably 20 to 400 MPa, and still more preferably 30 to 400 MPa.

The breaking elongation of the porous substrate is preferably 30% or more, more preferably 50% or more, still more preferably 70% or more, and even more preferably 100% or more. The breaking elongation of the porous substrate is usually 400% or less. Therefore, the breaking elongation of the porous substrate is preferably 30% to 400%, more preferably 50% to 400%, still more preferably 70% to 400%, and even more preferably 100% to 400%.

The tensile strength and breaking elongation of the porous substrate can be measured by the method described in Examples.

It is preferable that the porous substrate has both the tensile strength and breaking elongation. Therefore, it is preferable that the tensile strength is 20 MPa or more and the breaking elongation is 100% or more.

An average pore diameter of the porous substrate is preferably 5 nm or more, more preferably 10 nm or more, and still more preferably 20 nm or more. The average pore diameter of the porous substrate is usually 100 μm or less, and is preferably 50 μm or less and more preferably 1 μm or less. By using the porous substrate in this range, a good hydroxide ion-conductive membrane having both strength and low resistance can be created. Therefore, the average pore diameter of the porous substrate is preferably 5 nm to 100 μm, more preferably 10 nm to 50 μm, still more preferably 20 nm to 30 μm, even more preferably 20 nm to 27 μm, even more preferably 20 nm to 20 μm, even more preferably 20 nm to 10 μm, even more preferably 20 nm to 1 μm, and particularly preferably 20 nm to 100 nm.

The average pore diameter of the porous substrate can be evaluated by a mercury porosimetry. Specifically, the average pore diameter can be measured by the method described in Examples.

The porous substrate is preferably surface-modified. By the surface modification, a physical or chemical bonding state with the hydroxide ion-conductive polymer can be formed in a case of synthesizing the hydroxide ion-conductive polymer, and the adhesiveness between the hydroxide ion-conductive polymer and the porous substrate can be further increased. Examples of the method of the surface modification include a corona treatment or a plasma treatment.

The corona treatment and the plasma treatment can be performed by a normal method.

As the porous substrate, for example, "porous substrate film" and "laminate porous substrate film" described in paragraphs [0018] to [0023] of JP2018-127506A and "microporous membrane" described in paragraph [0022] of

JP2022-181107 are also suitable.

The thickness of the hydroxide ion-conductive membrane is 5 μm or more and less than 50 μm, and is preferably 6 to 40 μm, still more preferably 6 to 35 μm, even more preferably 7 to 30 μm, even still more preferably 7 to 25 μm, even still more preferably 7 to 20 μm, and particularly preferably 7 to 15 μm.

The thickness of the hydroxide ion-conductive membrane is measured at 10 randomly selected positions, and an arithmetic average of the 10 measured values is calculated. It is noted that the thickness of the porous substrate is also determined in the same manner as described above.

The thickness of the hydroxide ion-conductive membrane may be the same as the thickness of the porous substrate, or may be larger than the thickness of the porous substrate. The thickness of the hydroxide ion-conductive membrane may be the same as the thickness of the porous substrate in a case of synthesizing the hydroxide ion-conductive polymer, may be a thickness of about 110% to 120% of the thickness of the porous substrate, or may be a thickness of about 120% to 140% of the thickness of the porous substrate. In a case where the thickness of the hydroxide ion-conductive membrane is larger than the thickness of the porous substrate, a polymer filling internal pores is introduced in an amount greater than the void fraction (for example, more of the polymer is filled due to elongation (expansion) of the porous substrate, or the hydroxide ion-conductive polymer is provided also in a portion of the outer surface of the porous substrate).

The thickness of the hydroxide ion-conductive membrane is measured for the hydroxide ion-conductive membrane after drying to remove moisture.

The tensile strength of the hydroxide ion-conductive membrane is preferably 10 MPa or more, more preferably 15 MPa or more, and still more preferably 20 MPa or more. The tensile strength of the hydroxide ion-conductive membrane is usually 300 MPa or less. Therefore, the tensile strength of the hydroxide ion-conductive membrane is preferably 10 to 300 MPa, more preferably 15 to 300 MPa, and still more preferably 20 to 300 MPa.

The breaking elongation of the hydroxide ion-conductive membrane is preferably 30% or more, more preferably 50% or more, still more preferably 70% or more, and even more preferably 100% or more. The breaking elongation of the hydroxide ion-conductive membrane is usually 400% or less. Therefore, the breaking elongation of the hydroxide ion-conductive membrane is preferably 30% to 400%, more preferably 50% to 400%, still more preferably 70% to 400%, and even more preferably 100% to 400%.

The tensile strength and breaking elongation of the hydroxide ion-conductive membrane can be measured by the method described in Examples.

It is preferable that the hydroxide ion-conductive membrane has both the tensile strength and breaking elongation. Therefore, it is preferable that the tensile strength is 10 MPa or more and the breaking elongation is 100% or more.

The air permeability of the hydroxide ion-conductive membrane is preferably 500 seconds or more, more preferably 800 seconds or more, still more preferably 1,000 seconds or more, even more preferably 10,000 seconds or more, and even more preferably 50,000 seconds or more. The air permeability of the hydroxide ion-conductive membrane is usually 99,999 seconds (measurement limit) or less. The air permeability of the hydroxide ion-conductive membrane is preferably 500 to 99,999 seconds and more preferably 1,000 to 99,999 seconds.

The air permeability of the hydroxide ion-conductive membrane can be measured by the method described in Examples. The low air permeability means that it takes a long time for a gas to permeate. That is, the lower the air permeability is, the more difficult it is for a gas to pass through.

The water retention capacity of the hydroxide ion-conductive membrane is preferably 2% by mass or more, more preferably 2% to 25% by mass, still more preferably 5% to 20% by mass, even more preferably 7% to 20% by mass, and particularly preferably 9% to 15% by mass.

The water retention capacity of the hydroxide ion-conductive membrane can be measured by the method described in Examples.

The difference in voltage of the hydroxide ion-conductive membrane, which is measured by the method described in Examples ("Resistance evaluation") described later, is preferably 0.50 V or less, more preferably 0.30 V or less, and still more preferably 0.25 V or less. The difference in voltage is usually greater than 0.00 V. Therefore, the difference in voltage is preferably more than 0.00 V and 0.50 V or less, more preferably more than 0.00 V and 0.30 V or less, and still more preferably more than 0.00 V and 0.25 V or less.

The difference in voltage can be measured by the method described in Examples in a state where the hydroxide ion-conductive membrane is incorporated into the water electrolysis cell.

The hydrogen gas permeability (permeability of hydrogen gas generated on the cathode side to the anode side) of the hydroxide ion-conductive membrane is preferably less than 1.000 vol% (less than 1% by volume), more preferably less than 0.500 vol%, and still more preferably less than 0.100 vol%. The hydrogen gas permeability is usually preferably 0.001 vol% or more. Therefore, the hydrogen gas permeability is preferably 0.001 vol% or more and less than 1.000 vol%, more preferably 0.001 vol% or more and less than 0.500 vol%, and still more preferably 0.001 vol% or more and less than 0.100 vol%.

The hydrogen gas permeability can be measured by the method described in Examples after the hydroxide ion-conductive membrane is assembled into a water electrolysis cell.

In the hydroxide ion-conductive membrane, a rate of change in voltage in a case of repeating 500 cycles of energization and stop after initial energization by the method described in Examples described later is preferably 2% or less, more preferably 1% or less, and still more preferably 0.5% or less. The rate of change in voltage is usually 0.001% or more. Therefore, the rate of change in voltage is preferably 0.001% to 2%, more preferably 0.001% to 1%, and still more preferably 0.001% to 0.5%.

[Method for producing hydroxide ion-conductive membrane]

A method for producing a hydroxide ion-conductive membrane according to the embodiment of the present invention will be described. In the hydroxide ion-conductive membrane according to the embodiment of the present invention, a hydroxide ion-conductive membrane having a thickness of 5 μm or more and less than 50 μm can be obtained by impregnating a porous substrate with a polymerizable monomer-containing liquid containing 50% by mole or more of the polyfunctional polymerizable monomer IA and then subjecting the polymerizable monomer to a polymerization reaction.

FIG. 1 is a schematic view showing an outline of a method for producing a hydroxide ion-conductive membrane. A porous substrate 1a is shown on the left side of FIG. 1. A diagram on the right side of the arrow in FIG. 1 shows a hydroxide ion-conductive membrane 1 obtained by impregnating the porous substrate 1a with the polymerizable monomer-containing liquid and subjecting the polymerizable monomer to polymerization reaction. In the hydroxide ion-conductive membrane 1, a hydroxide ion-conductive polymer 1b is disposed in the pores and on the surface of the porous substrate 1a. As described above, the hydroxide ion-conductive polymer 1b may be disposed in the pores of the porous substrate 1a, and may cover or may not cover the surface of the porous substrate 1a.

The polymerizable monomers (the polyfunctional polymerizable monomer IA and the polymerizable monomer to be blended as necessary other than the polyfunctional polymerizable monomer IA) contained in the polymerizable monomer-containing liquid are as described above.

A proportion of the polyfunctional polymerizable monomer IA in all the polymerizable monomers in the polymerizable monomer-containing liquid is the same as the "proportion of the constituent component (I) in all the constituent components of the hydroxide ion-conductive polymer" described above. That is, the proportion of the polyfunctional polymerizable monomer IA in all the polymerizable monomers is 50% by mole or more, preferably 60% by mole or more, more preferably 70% by mole or more, still more preferably 80% by mole or more, may be 90% by mole or more, may be 95% by mole or more, and all the polymerizable monomers may be the polyfunctional polymerizable monomer IA.

The polymerizable monomer-containing liquid may contain a solvent or may not contain a solvent.

Examples of the solvent include water, isopropyl alcohol, methanol, ethanol, acetonitrile, tetrahydrofuran (THF), and the like. These may be used by being mixed.

In a case of using a solvent, a solids content of the polymerizable monomer-containing liquid is preferably 10% by mass or more, more preferably 30% by mass or more, still more preferably 50% by mass or more, even more preferably 70% by mass or more, and even more preferably 75% by mass or more.

It is also preferable that the polymerizable monomer-containing liquid does not contain a solvent.

The polymerizable monomer-containing liquid may contain a polymerization initiator in addition to the polymerizable monomer. In a case where the polymerizable group of the polymerizable monomer is a chain-polymerizable group, the polymerizable monomer-containing liquid usually contains a polymerization initiator. The polymerization initiator can be appropriately selected depending on the polymerizable group of the polymerizable monomer. As the polymerization initiator, a polymerization initiator selected from a photopolymerization initiator, a thermal polymerization initiator, a photocationic polymerization initiator, or a thermal cationic polymerization initiator is preferable, and these may be used in combination.

As the polymerization initiator, a polymerization initiator that is usually used for polymerization of the polymerizable monomer having a chain-polymerizable group can be used.

A content of the polymerization initiator in the polymerizable monomer-containing liquid is preferably 0.1 to 15 parts by mass, more preferably 0.5 to 10 parts by mass, and still more preferably 1 to 8 parts by mass with respect to 100 parts by mass of the total polymerizable monomers.

A method of impregnating the porous substrate with the polymerizable monomer-containing liquid is not particularly limited. For example, the porous substrate may be immersed in the polymerizable monomer-containing liquid to allow the polymerizable monomer-containing liquid to permeate at least into the pores, or the polymerizable monomer-containing liquid may be sprayed or applied to the porous substrate to allow the polymerizable monomer-containing liquid to permeate at least into the pores. For example, a porous substrate is laid on a resin substrate such as a polyethylene terephthalate (PET) film, an appropriate amount of the polymerizable monomer-containing liquid is placed

on the porous substrate and applied with an applicator, then another PET film is placed on the porous substrate, and the PET film is pressurized from above to push out the excess polymerizable monomer-containing liquid, thereby obtaining an impregnated membrane in which a desired amount of the polymerizable monomer-containing liquid is impregnated at least into the pores.

A method of subjecting the polymerizable monomer to a polymerization reaction is not particularly limited, and can be appropriately selected depending on the polymerizable group included in the polymerizable monomer and the type of the polymerization initiator. By this polymerization reaction, a hydroxide ion-conductive polymer having a three-dimensional mesh structure is formed.

In the polymerization reaction, it is preferable to polymerize the polymerizable monomer by any of light or heat. Conditions of the light irradiation and the heating can be appropriately set.

In this manner, the polymerizable monomer impregnated in the porous substrate can be subjected to a polymerization reaction to obtain a hydroxide ion-conductive membrane containing a hydroxide ion-conductive polymer in at least the pores of the porous substrate.

In the polymerization reaction, a part of the polymerizable monomer may be chemically bonded to a functional group on the surface of the porous substrate.

[Membrane electrode assembly]

The membrane electrode assembly according to the embodiment of the present invention has a structure in which a cathode catalyst layer, a hydroxide ion-conductive membrane according to the embodiment of the present invention, and an anode catalyst layer are laminated in this order.

The membrane electrode assembly may further include a pair of gas diffusion layers provided outside each of the cathode catalyst layer and the anode catalyst layer, in addition to the cathode catalyst layer, the hydroxide ion-conductive membrane according to the embodiment of the present invention, and the anode catalyst layer.

FIG. 2 shows a preferred form of the membrane electrode assembly according to the embodiment of the present invention. In the membrane electrode assembly 4 of FIG. 2, a cathode catalyst layer 2c is formed on one surface of the hydroxide ion-conductive membrane 1, an anode catalyst layer 2a is formed on the other surface, and a gas diffusion layer 3 is formed on a surface of each of the catalyst layers opposite to the hydroxide ion-conductive membrane 1. The membrane electrode assembly 4 has a laminated structure in which the gas diffusion layer 3, the cathode catalyst layer 2c, the hydroxide ion-conductive membrane 1, the anode catalyst layer 2a, the gas diffusion layer 3 are laminated in this order. The hydroxide ion-conductive membrane 1 has a porous substrate and a hydroxide ion-conductive polymer disposed in the pores thereof, but is shown as an integral layer in FIG. 2. The anode catalyst layer 2a contains a particulate anode catalyst 21 and an ionomer resin 23 that also functions as a binder, and the anode catalyst 21 is bound by the ionomer resin 23. The cathode catalyst layer 2c contains a particulate cathode catalyst 22 and an ionomer resin 23 that also functions as a binder, and the cathode catalyst 22 is bound by the ionomer resin 23. In FIG. 2, a bipolar plate 5 is further formed on a surface of the two gas diffusion layers 3 of the membrane electrode assembly 4 opposite to the catalyst layer, and the form of a water electrolysis cell 10 is adopted.

Each member constituting the membrane electrode assembly will be described.

<Cathode catalyst layer>

The cathode catalyst layer can be a cathode catalyst layer that can be used in a normal membrane electrode assembly. The cathode catalyst layer is preferably a layer containing a cathode catalyst and an ionomer resin.

The cathode catalyst layer may be one obtained by attaching a catalyst layer to a metal mesh or net, and then baking and firing the catalyst layer. It is preferable that the mesh or net is made of corrosion-resistant stainless steel (SUS) or nickel.

The cathode catalyst may be one that decomposes water by electrolysis to generate hydrogen (gas). As the cathode catalyst, platinum-supported carbon particles, platinum-coated titanium, palladium-supported carbon particles, cobalt glyoxime, nickel glyoxime, or the like can be used. In addition, a non-noble metal catalyst such as iron, iron-rare earth, iron-nickel alloys, or nickel may be used.

The cathode catalyst is preferably particulate.

As the ionomer resin, an anionic ionomer is preferable.

As the ionomer resin, a sulfonated plastic-based electrolyte such as perfluoroalkane sulfonic acid, sulfonated polyether ketone, sulfonated polyether sulfone, sulfonated polyether ether sulfone, sulfonated polysulfone, sulfonated polysulfide, or sulfonated polyphenylene, a sulfoalkylated plastic-based electrolyte such as sulfoalkylated polyether ether ketone, sulfoalkylated polyether sulfone, sulfoalkylated polyether ether sulfone, sulfoalkylated polysulfone, sulfoalkylated polysulfide, or sulfoalkylated polyphenylene, or the like can be used.

The cathode catalyst layer can be formed by producing an ink for forming a catalyst layer containing the cathode

catalyst, the ionomer resin, and a solvent as necessary, and applying and drying the ink.

<Anode catalyst layer>

The anode catalyst layer can be an anode catalyst layer that can be used in a normal membrane electrode assembly. The anode catalyst layer is preferably a layer containing an anode catalyst and an ionomer resin.

The anode catalyst layer may be one obtained by attaching a catalyst layer to a metal mesh or net, and then baking and firing the catalyst layer. It is preferable that the mesh or net is made of corrosion-resistant SUS or nickel.

The anode catalyst only needs to electrolyze water to generate oxygen and water. As the anode catalyst, it is possible to use an iridium oxide, iridium oxide-coated titanium, an iridium ruthenium cobalt oxide, an iridium ruthenium tin oxide, an iridium ruthenium iron oxide, an iridium ruthenium nickel oxide, an iridium tin oxide, an iridium zirconium oxide, a ruthenium titanium oxide, a ruthenium zirconium oxide, a ruthenium tantalum oxide, a ruthenium titanium cerium oxide, or the like.

In addition, a non-noble metal catalyst such as nickel, nickel-based alloys, iron, nickel-coated iron, a nickel-cobalt oxide, a cobalt oxide, a lanthanum-doped cobalt oxide, a lanthanum strontium cobalt oxide, and a zinc-cobalt oxide may be used.

The anode catalyst is preferably particulate.

As the ionomer resin, the same ionomer resin as that described in the cathode catalyst layer can be used.

The anode catalyst layer can be formed by producing an ink for forming a catalyst layer containing the anode catalyst, the ionomer resin, and a solvent as necessary, and applying and drying the ink.

<Gas diffusion layer>

The gas diffusion layer can be a layer capable of transporting gas and moisture and having electron conductivity.

The gas diffusion layer can be a gas diffusion layer that can be used in a typical membrane electrode assembly.

As a constituent material of the gas diffusion layer, a porous material such as a carbon fiber nonwoven fabric, a carbon paper, a carbon plate, a stainless steel (SUS) fiber nonwoven fabric, a sintered stainless steel body, a titanium (Ti) fiber nonwoven fabric, a sintered titanium body, a nickel (Ni) fiber nonwoven fabric, a sintered nickel body, a material coated with platinum or gold on each of these substrates can be used.

The membrane electrode assembly can be formed by applying the ink for forming a catalyst layer to the hydroxide ion-conductive membrane, or bonding a pre-formed catalyst layer to the hydroxide ion-conductive membrane.

In a case where the gas diffusion layer is provided on the membrane electrode assembly, the ink for forming a catalyst layer may be applied to one surface side of the gas diffusion layer to form a gas diffusion layer with a catalyst layer, and the gas diffusion layer with a catalyst layer may be bonded to the hydroxide ion-conductive membrane.

[Method for producing hydrogen]

The method for producing hydrogen according to the embodiment of the present invention is the same as a typical method for producing hydrogen (water electrolysis) except that the membrane electrode assembly according to the embodiment of the present invention is used as a membrane electrode assembly.

In the method for producing hydrogen according to the embodiment of the present invention, since the hydroxide ion conductivity of the hydroxide ion-conductive membrane or the membrane electrode assembly according to the embodiment of the present invention is high, water electrolysis can be performed not only using a high concentration of alkali aqueous solution but also using a lower concentration of alkali aqueous solution or water.

[Hydrogen production system]

The hydrogen production system according to the embodiment of the present invention is a suitable system (apparatus) for performing the method for producing hydrogen according to the embodiment of the present invention.

The hydrogen production system according to the embodiment of the present invention is the same as a typical hydrogen production system except that the membrane electrode assembly according to the embodiment of the present invention is included as the membrane electrode assembly.

The hydrogen production system according to the embodiment of the present invention can be, for example, a water electrolysis system in which the membrane electrode assembly according to the embodiment of the present invention is further combined with a constituent member generally used in water electrolysis, such as a bipolar plate.

## Examples

Hereinafter, the present invention will be described in more detail based on Examples; however, the present invention is not limited thereto be interpreted.

### [Production of ink for forming catalyst layer]

#### <Preparation of ink 1-a1i for forming anode catalyst layer>

1.2 g of a Nafion dispersion liquid (anionic ionomer, manufactured by FUJIFILM Wako Chemical Corporation, 5% Nafion dispersion liquid DE521 (trade name)) and 0.27 g of an iridium oxide powder (manufactured by TANAKA PRECIOUS METAL GROUP Co., Ltd., TEC77100 (trade name), iridium content of 75% by mass) were mixed in a 5 mL vial, and the mixture was dispersed for 5 minutes at an output of 30 W using an ultrasonic homogenizer UH-300 (trade name, manufactured by SMT Co., Ltd.), cooled at 5°C for 10 minutes, and then dispersed again for 5 minutes at an output of 30 W. In this way, the ink 1-a1i for forming an anode catalyst layer was prepared.

#### <Preparation of ink 1-b1i for forming cathode catalyst layer>

2.9 g of a Nafion dispersion liquid (anionic ionomer, manufactured by FUJIFILM Wako Chemical Corporation, 5% Nafion dispersion liquid DE521 (trade name)) and 0.34 g of a platinum carbon powder (manufactured by TANAKA PRECIOUS METAL GROUP Co., Ltd., TEC10E50E (trade name), platinum content of 47% by mass) were mixed in a 10 mL vial, and the mixture was dispersed for 5 minutes at an output of 30 W using an ultrasonic homogenizer UH-300 (trade name, manufactured by SMT Co., Ltd.), cooled at 5°C for 10 minutes, and then dispersed again for 5 minutes at an output of 30 W, thereby preparing the ink 1-b1i for forming a cathode catalyst layer.

### [Production of gas diffusion layer (GDL) with catalyst layer]

#### <Production of gas diffusion layer 1-a2 with anode catalyst layer 1-a1>

The ink 1-a1i for forming an anode catalyst layer was applied to a carbon fiber nonwoven fabric (manufactured by SGL Carbon SE, GDL-39BB (trade name)) having a microporous layer using an applicator such that the amount of the iridium oxide applied was 1.0 mg/cm$^2$. By natural drying, a gas diffusion layer 1-a2 with an anode catalyst layer 1-a1 was obtained.

#### <Production of gas diffusion layer 1-b2 with cathode catalyst layer 1-b1>

The ink 1-b1i for forming a cathode catalyst layer was applied to a carbon fiber nonwoven fabric (manufactured by SGL Carbon SE, GDL-39BB (trade name)) having a microporous layer using an applicator such that the amount of the platinum carbon powder applied was 1.0 mg/cm$^2$. By natural drying, a gas diffusion layer 1-b2 with a cathode catalyst layer 1-b1 was obtained.

### [Preparation of hydroxide ion-conductive membrane]

#### <Example 1>

-Preparation of polymerizable monomer-containing liquid-

20.0 g of pure water, 6.0 g of isopropyl alcohol, and 72.0 g of a monomer m1 as a polyfunctional polymerizable monomer were charged into a 200 mL three-neck flask to produce a solution. In a yellow light, furthermore, 1.0 g of 2-hydroxy-2-methylpropiophenone (manufactured by Tokyo Chemical Industry Co., Ltd.) and 1.0 g of ethyl (2,4,6-trimethylbenzoyl)phenylphosphinate (manufactured by Tokyo Chemical Industry Co., Ltd.) as polymerization initiators were added to prepare a polymerizable monomer-containing liquid 1-m1 having a solids content of 74% by mass.

-Preparation of hydroxide ion-conductive membrane-

In a yellow light, a porous membrane made of polyethylene (manufactured by Toray Industries, Inc., SEETLA (trade name)) (without corona treatment) having a thickness of 7 μm and a porosity of 40% was laid on a PET film having a thickness of 10 μm as a porous substrate, an appropriate amount of the polymerizable monomer-containing liquid 1-m1

was placed thereon and applied with an applicator, then another PET film was placed on the porous film made of polyethylene after the application, and the excess polymerizable monomer-containing liquid that was not impregnated into the porous film made of polyethylene was pushed out to form an impregnated membrane in which the polymerizable monomer-containing liquid was impregnated into the pores of the porous substrate. The impregnated membrane was irradiated with UV light using a UV irradiation apparatus (EXECURE3000 (trade name), manufactured by HOYA Corporation) adjusted to 100 $mJ/cm^2 \cdot sec$ at 365 nm such that the cumulative light amount was 800 $mJ/cm^2$, the monomer was polymerized, and then the PET film was removed. In this way, a hydroxide ion-conductive membrane 1-c1 having a thickness of 10 μm was produced in which the hydroxide ion-conductive polymer was disposed in the pores of the porous substrate and the surface of the porous substrate was also covered with the hydroxide ion-conductive polymer.

<Example 2>

A hydroxide ion-conductive membrane 1-c2 was obtained in the same manner as in Example 1, except that in the preparation of the hydroxide ion-conductive membrane in Example 1, a porous membrane made of polyethylene (manufactured by Toray Industries, Inc., SEETLA (trade name)) (without corona treatment) having a thickness of 17 μm and a porosity of 59% was used as the porous substrate, and the thickness of the obtained hydroxide ion-conductive membrane was set to 19 μm.

<Example 3>

A hydroxide ion-conductive membrane 1-c3 was obtained in the same manner as in Example 1, except that a porous membrane made of polypropylene (manufactured by Celgard LLC, CE2500 (trade name)) (without corona treatment) having a thickness of 25 μm and a porosity of 41% was used as the porous substrate, the mixture was heated at 80°C for 5 minutes in addition to the UV irradiation during the polymerization, and the thickness of the obtained hydroxide ion-conductive membrane was set to 27 μm.

<Example 4>

20.0 g of pure water, 6.0 g of isopropyl alcohol, and 36.0 g of a monomer m1 and 15.4 g of a monomer Xm1 as polyfunctional polymerizable monomers were charged into a 200 mL three-neck flask to produce a solution. In a yellow light, furthermore, 1.0 g of 2-hydroxy-2-methylpropiophenone (manufactured by Tokyo Chemical Industry Co., Ltd.) and 1.0 g of ethyl (2,4,6-trimethylbenzoyl)phenylphosphinate (manufactured by Tokyo Chemical Industry Co., Ltd.) as polymerization initiators were added to prepare a polymerizable monomer-containing liquid 1-m4 having a solids content of 67% by mass.

A hydroxide ion-conductive membrane 1-c4 was obtained in the same manner as in Example 1, except that in the preparation of the hydroxide ion-conductive membrane in Example 1, the polymerizable monomer-containing liquid 1-m4 was used as the polymerizable monomer-containing liquid.

<Example 5>

50.0 g of pure water, 25.0 g of isopropyl alcohol, and 17.4 g of a monomer m2 and 36.0 g of a monomer m6 as polyfunctional polymerizable monomers were charged into a 200 mL three-neck flask to produce a solution. In a yellow light, furthermore, 1.0 g of 2-hydroxy-2-methylpropiophenone (manufactured by Tokyo Chemical Industry Co., Ltd.), 1.0 g of ethyl (2,4,6-trimethylbenzoyl)phenylphosphinate (manufactured by Tokyo Chemical Industry Co., Ltd.), and 1.0 g of an azo polymerization initiator (V-501 (trade name), manufactured by FUJIFILM Wako Pure Chemical Corporation) as polymerization initiators were added to prepare a polymerizable monomer-containing liquid 1-m5 having a solids content of 43% by mass.

A hydroxide ion-conductive membrane 1-c5 was obtained in the same manner as in Example 1, except that in the preparation of the hydroxide ion-conductive membrane in Example 1, the polymerizable monomer-containing liquid 1-m5 was used as the polymerizable monomer-containing liquid, the mixture was heated at 80°C for 10 minutes in addition to the UV irradiation during the polymerization, and the thickness of the obtained hydroxide ion-conductive membrane was set to 9 μm.

<Example 6>

72.0 g of a monomer m3 as a polyfunctional polymerizable monomer was charged into a 200 mL three-neck flask, and in a yellow light, 5.0 g of diphenyl[4-(phenylthio)phenyl]sulfonium hexafluorophosphate (manufactured by Tokyo Chemical Industry Co., Ltd.) as an initiator was added thereto to prepare a polymerizable monomer-containing liquid 1-m6

having a solids content of 100% by mass.

A hydroxide ion-conductive membrane 1-c6 was obtained in the same manner as in Example 1, except that in the preparation of the hydroxide ion-conductive membrane in Example 1, the polymerizable monomer-containing liquid 1-m6 was used as the polymerizable monomer-containing liquid and the mixture was heated at 100°C for 10 minutes in addition to the UV irradiation during the polymerization.

<Example 7>

A hydroxide ion-conductive membrane 1-c7 was obtained in the same manner as in Example 6, except that in the preparation of the polymerizable monomer-containing liquid in Example 6, a monomer m4 was used as the polyfunctional polymerizable monomer, 8.6 g of acetonitrile was used as a solvent to obtain a polymerizable monomer-containing liquid 1-m7 having a solids content of 90% by mass, and in the preparation of the hydroxide ion-conductive membrane, the polymerizable monomer-containing liquid 1-m7 was used as the polymerizable monomer-containing liquid.

<Example 8>

A hydroxide ion-conductive membrane 1-c8 was obtained in the same manner as in Example 1, except that in the preparation of the hydroxide ion-conductive membrane in Example 1, a nonwoven fabric made of polyethylene (manufactured by JNC Corporation, ELFino (trade name)) (with corona treatment) having a thickness of 35 μm and a porosity of 65% was used as the porous substrate, and the thickness of the hydroxide ion-conductive membrane was set to 45 μm.

<Example 9>

A hydroxide ion-conductive membrane 1-c9 was obtained in the same manner as in Example 1, except that in the preparation of the polymerizable monomer-containing liquid of Example 1, 500 g of pure water and 172 g of isopropyl alcohol were used to obtain a polymerizable monomer-containing liquid 1-m9 having a solids content of 10% by mass, and in the preparation of the hydroxide ion-conductive membrane, the polymerizable monomer-containing liquid 1-m9 was used as the polymerizable monomer-containing liquid and the thickness of the obtained hydroxide ion-conductive membrane was set to 9 μm.

<Example 10>

A hydroxide ion-conductive membrane 1-c10 was obtained in the same manner as in Example 7, except that in the preparation of the polymerizable monomer-containing liquid of Example 7, a monomer m5 was used as the polyfunctional polymerizable monomer to obtain a polymerizable monomer-containing liquid 1-m10, and in the preparation of the hydroxide ion-conductive membrane, the polymerizable monomer-containing liquid 1-m10 was used as the polymerizable monomer-containing liquid and the thickness of the obtained hydroxide ion-conductive membrane was set to 7 μm.

<Example 11>

A hydroxide ion-conductive membrane 1-c11 was obtained in the same manner as in Example 1, except that in the preparation of the hydroxide ion-conductive membrane, a nonwoven fabric made of polytetrafluoroethylene (PTFE) (manufactured by VALQUA, LTD., PTFE nanofiber (trade name)) (with corona treatment) having a thickness of 40 μm and a porosity of 65% was used as the porous substrate and the thickness of the obtained hydroxide ion-conductive membrane was set to 45 μm.

<Example 12>

72.0 g of a monomer m7 as a polyfunctional polymerizable monomer was charged into a 200 mL three-neck flask, and in a yellow light, 5.0 g of diphenyl[4-(phenylthio)phenyl]sulfonium hexafluorophosphate (manufactured by Tokyo Chemical Industry Co., Ltd.) as an initiator was added thereto to prepare a polymerizable monomer-containing liquid 1-m12 having a solids content of 100% by mass.

A hydroxide ion-conductive membrane 1-c12 was obtained in the same manner as in Example 1, except that in the preparation of the hydroxide ion-conductive membrane in Example 1, the polymerizable monomer-containing liquid 1-m12 was used as the polymerizable monomer-containing liquid, a porous membrane made of polyethylene (manufactured by Toray Industries, Inc., SEETLA (trade name)) (without corona treatment) having a thickness of 17 μm and a

porosity of 59% was used as the porous substrate, the mixture was heated at 90°C for 10 minutes in addition to the UV irradiation during the polymerization, and the thickness of the obtained hydroxide ion-conductive membrane was set to 20 μm.

<Example 13>

16.0 g of pure water, 10.0 g of isopropyl alcohol, and 72.0 g of a monomer m8 as a polyfunctional polymerizable monomer were charged into a 200 mL three-neck flask to produce a solution. In a yellow light, furthermore, 1.0 g of 2-hydroxy-2-methylpropiophenone (manufactured by Tokyo Chemical Industry Co., Ltd.) and 1.0 g of ethyl (2,4,6-trimethylbenzoyl)phenylphosphinate (manufactured by Tokyo Chemical Industry Co., Ltd.) as polymerization initiators were added to prepare a polymerizable monomer-containing liquid 1-m13 having a solids content of 74% by mass.

A hydroxide ion-conductive membrane 1-c13 was obtained in the same manner as in Example 1, except that in the preparation of the hydroxide ion-conductive membrane in Example 1, the polymerizable monomer-containing liquid 1-m13 was used as the polymerizable monomer-containing liquid, a porous membrane made of polyethylene (manufactured by Toray Industries, Inc., SEETLA (trade name)) (without corona treatment) having a thickness of 17 μm and a porosity of 59% was used as the porous substrate, and the thickness of the obtained hydroxide ion-conductive membrane was set to 21 μm.

<Example 14>

A hydroxide ion-conductive membrane 1-c14 was obtained in the same manner as in Example 13, except that in the preparation of the polymerizable monomer-containing liquid in Example 13, a monomer m9 was used as the polyfunctional polymerizable monomer to obtain a polymerizable monomer-containing liquid 1-m14, and in the preparation of the hydroxide ion-conductive membrane, the polymerizable monomer-containing liquid 1-m14 was used as the polymerizable monomer-containing liquid.

<Example 15>

A hydroxide ion-conductive membrane 1-c15 was obtained in the same manner as in Example 13, except that in the preparation of the polymerizable monomer-containing liquid in Example 13, a monomer m10 was used as the polyfunctional polymerizable monomer to obtain a polymerizable monomer-containing liquid 1-m15, and in the preparation of the hydroxide ion-conductive membrane, the polymerizable monomer-containing liquid 1-m15 was used as the polymerizable monomer-containing liquid.

<Example 16>

A hydroxide ion-conductive membrane 1-c16 was obtained in the same manner as in Example 12, except that in the preparation of the polymerizable monomer-containing liquid in Example 12, a monomer m11 was used as the polyfunctional polymerizable monomer to obtain a polymerizable monomer-containing liquid 1-m16, and in the preparation of the hydroxide ion-conductive membrane, the polymerizable monomer-containing liquid 1-m16 was used as the polymerizable monomer-containing liquid.

<Comparative Example 1>

10 g of pure water, 5 g of isopropyl alcohol, and 35 g of a monomer m1 and 22.4 g of a monomer Xm1 as polyfunctional polymerizable monomers were charged into a 200 mL three-neck flask to produce a solution. In a yellow light, furthermore, 1 g of 2-hydroxy-2-methylpropiophenone (manufactured by Tokyo Chemical Industry Co., Ltd.) and 1 g of ethyl (2,4,6-trimethylbenzoyl)phenylphosphinate (manufactured by Tokyo Chemical Industry Co., Ltd.) as polymerization initiators were added to prepare a polymerizable monomer-containing liquid 1-xm1 having a solids content of 80% by mass.

A hydroxide ion-conductive membrane c-x1 was obtained in the same manner as in Example 1, except that in the preparation of the hydroxide ion-conductive membrane in Example 1, the polymerizable monomer-containing liquid 1-xm1 was used as the polymerizable monomer-containing liquid.

<Comparative Example 2>

A hydroxide ion-conductive membrane c-x2 was obtained in the same manner as in Example 1, except that in the preparation of the polymerizable monomer-containing liquid of Example 1, a mixed solution of water and isopropanol

(water:isopropanol = 10:3 (mass ratio)) was added such that a solids content is 80% by mass, and in the preparation of the hydroxide ion-conductive membrane, two sheets of a porous membrane made of polypropylene (manufactured by Celgard LLC, CE2500 (trade name)) (without corona treatment) having a thickness of 25 μm and a porosity of 41% were laminated and used as the porous substrate and the thickness of the obtained hydroxide ion-conductive membrane was set to 60 μm. The total thickness of two sheets of the porous membrane made of polypropylene was described in the column of the thickness of the porous substrate in Table 1.

<Comparative Example 3>

64.8 g of a monomer Xm1 and 7.2 g of a monomer Xm2 as polyfunctional polymerizable monomers were charged into a 200 mL three-neck flask to produce a solution. In a yellow light, furthermore, 1.0 g of 2-hydroxy-2-methylpropiophenone (manufactured by Tokyo Chemical Industry Co., Ltd.) and 1.0 g of ethyl (2,4,6-trimethylbenzoyl)phenylphosphinate (manufactured by Tokyo Chemical Industry Co., Ltd.) as polymerization initiators were added to prepare a polymerizable monomer-containing liquid 1-xm3 having a solids content of 100% by mass.

A hydroxide ion-conductive membrane c-x3 was obtained in the same manner as in Example 1, except that in the preparation of the hydroxide ion-conductive membrane in Example 1, the polymerizable monomer-containing liquid 1-xm3 was used as the polymerizable monomer-containing liquid.

<Comparative Example 4>

A hydroxide ion-conductive membrane c-x4 was obtained in the same manner as in Example 1, except that in the preparation of the polymerizable monomer-containing liquid of Example 1, a mixed solution of water and isopropanol (water:isopropanol = 10:3 (mass ratio)) was added such that a solids content is 80% by mass, and in the preparation of the hydroxide ion-conductive membrane, without using porous substrate, a film consisting only of a hydroxide ion-conductive polymer and having a thickness of 50 μm was obtained by sandwiching the polymerizable monomer-containing liquid between two sheets of a PET film.

The polymerizable monomers used are shown below.

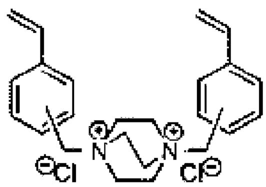

Monomer m1

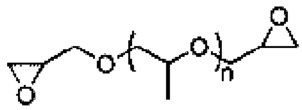

Monomer m4 n = 5

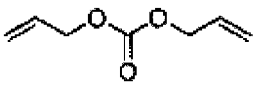

Monomer m2

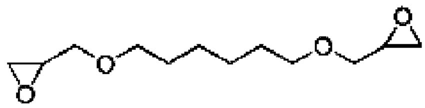

Monomer m5

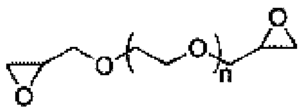

Monomer m3 n = 5

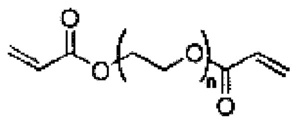

Monomer m6 n = 4

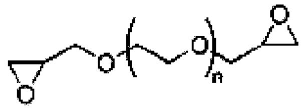

Monomer m7 n = 13

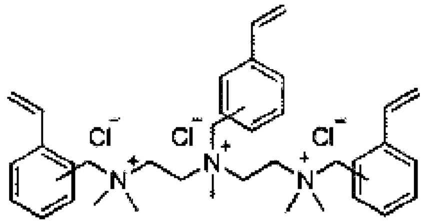

Monomer m9

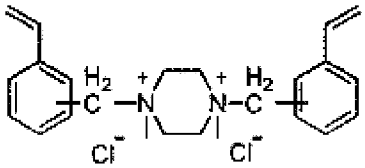

Monomer m8

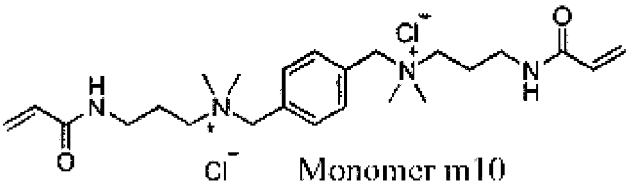

Monomer m10

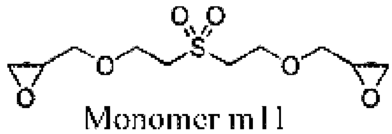

Monomer m11

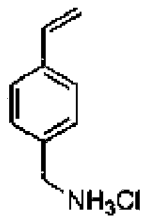

Monomer Xm1

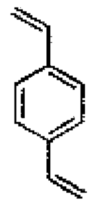

Monomer Xm2

In all of the hydroxide ion-conductive membranes obtained as described above, the ion conductivity was 0.1 mS/cm to 10 S/cm.

[Production of water electrolysis cell]

<Water electrolysis cell 101>

The gas diffusion layer 1-a2 with the anode catalyst layer 1-a1 and the gas diffusion layer 1-b2 with the cathode catalyst layer 1-b1, which were produced above, were each punched out to have an area of 1 $cm^2$ in the same shape, laminated to interpose the produced hydroxide ion-conductive membrane 1-c1 therebetween with the catalyst layer side facing the inside, and pressurized at a surface pressure of 4 MPa. The pressurized laminate was sandwiched between two Ni-made bipolar plates having a flow path, and was restrained with bolts such that the restraint pressure was 1 MPa. In this way, a water electrolysis cell 101 having the same layer structure as the water electrolysis cell 10 having a layer structure of a bipolar plate-gas diffusion layer-anode catalyst layer-hydroxide ion-conductive membrane-cathode catalyst layer-gas diffusion layer-bipolar plate shown in FIG. 2 was obtained. The water electrolysis cell 101 has a structure including the membrane electrode assembly (anode catalyst layer-hydroxide ion-conductive membrane-cathode catalyst layer or gas diffusion layer-anode catalyst layer-hydroxide ion-conductive membrane-cathode catalyst layer-gas diffusion layer).

<Water electrolysis cells 102 to 116 and c101 to c104>

Water electrolysis cells 102 to 116 and c101 to c104 were obtained in the same manner as in the preparation of the water electrolysis cell 101, except that in the preparation of the water electrolysis cell 101, the hydroxide ion-conductive membranes 1-c2 to 1-c16 and c-x1 to c-x4 produced in Examples 2 to 16 and Comparative Examples 1 to 4 were used.
The obtained hydroxide ion-conductive polymer, porous substrate, hydroxide ion-conductive membrane, and

water electrolysis cell were evaluated as follows.

[Measurement of element concentration of oxygen element, sulfur element, nitrogen element, and carbon element contained in hydroxide ion-conductive polymer]

To calculate the element concentration of each of the oxygen element, the sulfur element, the nitrogen element, and the carbon element contained in the hydroxide ion-conductive polymer, element analysis was performed using an organic element analyzer Vario EL cube (manufactured by Elementar Analysensysteme GmbH).
For the element analysis, 30 mg of the hydroxide ion-conductive polymer collected by scraping the hydroxide ion-conductive membrane and dissolving the scraped hydroxide ion-conductive polymer in dimethyl sulfoxide (DMSO) or tetrahydrofuran (THF) was used.
The ratio of the heteroatom was determined from the obtained element concentrations by the following expression.

Ratio of heteroatom = [total element concentrations (at%) of oxygen element, sulfur element, and nitrogen element]/[carbon element concentration (at%)]

[Evaluation of air permeability]

The air permeability of the hydroxide ion-conductive membrane was determined as follows.
The air permeability (air permeability resistance) of the hydroxide ion-conductive membrane was measured by the method described in JIS P8117:2009 using an Oken-type air permeability tester (EYO-651MR (trade name), manufactured by Asahi Seiko Co., Ltd.). The hydroxide ion-conductive membrane was left to stand at 25°C and a relative humidity of 45% for 24 hours to be pre-treated. The measurement was performed at room temperature (25°C) and a relative humidity of 45%, and an average value of three measurements was obtained as the air permeability.

[Evaluation of water retention capacity]

The water retention capacities of the hydroxide ion-conductive polymer and the hydroxide ion-conductive membrane were measured as follows.
In the measurement of the water retention capacity of the hydroxide ion-conductive polymer, in the preparation of the hydroxide ion-conductive membrane, without using porous substrate, a film consisting only of a hydroxide ion-conductive polymer and having a thickness of 50 μm was obtained by sandwiching the polymerizable monomer-containing liquid between two sheets of a PET film, and used as a sample.
Test pieces having a size of 5 cm in length × 5 cm in width were cut out from the film of the hydroxide ion-conductive polymer and the hydroxide ion-conductive membrane, and the measurement was performed using these test pieces.
For the test piece, a mass of the test piece after drying for 12 hours under vacuum at 60°C is defined as WA, a mass of the test piece after 8 hours in a state where the entire dried test piece is completely immersed in a 0.2 M potassium hydroxide (KOH) aqueous solution is defined as WB, and the water retention capacity is calculated by the following numerical expression.

$$\text{Water retention capacity (\%)} = (WB - WA)/WB \times 100$$

[Evaluation of porosity of porous substrate]

A volume (volume of the entire porous substrate including a volume of a pore) of the porous substrate is defined as X ($cm^3$), a weight of the porous substrate is defined as W (g), and a true density of the porous substrate is defined as d ($g/cm^3$), and the porosity is calculated by the following numerical expression from X and a theoretical volume Y ($cm^3$) (Y = W/d).

$$\text{Porosity (\%)} = [1 - (Y/X)] \times 100$$

[Evaluation of average pore diameter of porous substrate]

An average pore diameter of the moisture-resistant substrate (in Table 1, "pore diameter") was measured using a

fine pore distribution measuring apparatus (Autopore V 9620 (trade name), manufactured by Micromeritics Instrument Corporation). The porous substrate cut out into a square of 2 cm square was used as a sample.

[Evaluation of mechanical properties]

As an indicator of the mechanical properties of the porous substrate and the hydroxide ion-conductive membrane, the tensile strength and the breaking elongation were measured as follows.

The tensile strength and the breaking elongation were measured at 25°C using a motorized test stand MX-500N and a force gauge ZTA series (both trade names, manufactured by IMADA Co., Ltd.).

Each of the porous substrates used above and each of the hydroxide ion-conductive membranes obtained above were cut out into a strip shape of 5 mm × 15 mm to obtain a test piece.

Two parallel lines were drawn at the center portion of the obtained test piece at an interval of 5 mm, and both ends of the test piece were clamped and pulled at a speed of 0.5 mm/min. The maximum tensile stress at this time was defined as the tensile strength. The breaking elongation was calculated by the following expression. In this way, the tensile strength and the breaking elongation were measured.

$$\text{Breaking elongation (\%)} = 100 \times (L - L_0)/L_0$$

$L_0$: distance between lines before test, L: distance between lines at break

For the porous substrate of Comparative Example 2, two sheets of the porous substrate used to obtain the hydroxide ion-conductive membrane c-x2 were laminated, and the above-described measurement was performed.

[Evaluation of water electrolysis cell]

While supplying a 0.2 M KOH aqueous solution heated to 60°C at a flow rate of 10 mL/min to each of the cathode catalyst layer and the anode catalyst layer of each water electrolysis cell obtained above, the cells were energized at current density of 0.1 A/cm2 for 4 hours, thereby obtaining water electrolysis cells after initial energization. Various evaluations described later were performed using these water electrolysis cells after initial energization.

<Resistance evaluation>

The initial voltage (V0) of each water electrolysis cell immediately after the initial energization (energization at 0.1 A/$cm^2$ for 4 hours) and the voltage (V1) immediately after energizing each water electrolysis cell at 1.0 A/$cm^2$ for 10 minutes while supplying a 0.2 M KOH aqueous solution heated to 60°C were measured. V1 - V0 was obtained from the obtained measurement values as the difference in voltage.

The obtained difference in voltage was applied to the following evaluation standard to evaluate the resistance. The higher the difference in voltage, the higher the resistance (the lower the hydroxide ion conductivity).

-Evaluation standard of difference in voltage-

A: more than 0.00 V and 0.25 V or less
B: more than 0.25 V and 0.30 V or less
C: more than 0.30 V and 0.50 V or less
D: more than 0.50 V

<Evaluation of hydrogen gas permeability>

Each water electrolysis cell after the initial energization was energized at 0.1 A/cm2 for 10 minutes while supplying a 0.2 M KOH aqueous solution heated to 60°C, and the gas collected from the flow path of the bipolar plate on the anode side was analyzed to evaluate the degree to which the hydrogen gas generated on the cathode side permeated to the anode side.

Specifically, the gas collected from the flow path of the bipolar plate on the anode side during the 10 minutes of energization was cooled at 10°C, water vapor was removed, then the gas was passed through the gas chromatograph (GC3210G (trade name), manufactured by GL Sciences Inc., column: MS13X (trade name)), and the ratio of the hydrogen gas contained in the collected gas was measured.

The obtained ratio of the hydrogen gas was applied to the following evaluation standard to perform evaluation.

-Evaluation standard of hydrogen gas permeability (ratio of hydrogen gas)-

A: less than 0.100 vol%
B: 0.100 vol% or more and less than 0.500 vol%
C: 0.500 vol% or more and less than 1.000 vol%
D: 1.000 vol% or more

<Evaluation of repeated energization durability>

Each water electrolysis cell after the initial energization was energized at 0.1 A/cm2 for 1 hour while supplying a 0.2 M KOH aqueous solution heated to 60°C, and then the liquid supply and the energization were stopped and the water electrolysis cell was left for 3 hours. This was defined as one cycle, and energization and stop were repeated for 500 cycles.
The voltage after 1 cycle and the voltage after 500 cycles were measured, and the rate of change in voltage was obtained.
The obtained rate of change in voltage was applied to the following evaluation standard to evaluate the repeated energization durability.

Rate of change in voltage = [(voltage after 500 cycles - voltage after 1 cycle)/voltage after 1 cycle] × 100 (%)

-Evaluation standard of repeated energization durability-

A: 0.5% or less
B: more than 0.5% and 1% or less
C: more than 1% and 2% or less
D: more than 2% and 5% or less
E: more than 5% or inoperable within 500 cycles

[Table 1-1]

Table 1

| | | No. | Hydroxide ion-conductive membrane: Hydroxide ion-conductive polymer: Monomer 1 | | Monomer 2 | | Proportion of constituent component (I) | Polymerization initiator | Solids content | Polymerization method | Ratio of heteroatom | Water retention capacity | Porous substrate: Component | Thickness | Porosity | Pore diameter | Tensile strength | Breaking elongation | Properties of hydroxide ion-conductive membrane: Thickness | Tensile strength | Breaking elongation | Air permeability | Water retention capacity |
|---|---|---|---|---|---|---|---|---|---|---|---|---|---|---|---|---|---|---|---|---|---|---|---|
| | | | Type | Ratio (% by mole) | Type | Ratio (% by mole) | % by mole | | (% by mass) | | | (%) | | (μm) | (%) | nm | (MPa) | (%) | (mm) | (MPa) | (%) | (Seconds) | (%) |
| Example | 1 | 1-c1 | m1 | 100 | | | 100 | HMP EPTBP | 74 | UV | 0.08 | 25 | PE-m | 7 | 40 | 45 | 190 | 105 | 10 | 185 | 110 | >10,000 | 10 |
| | 2 | 1-c2 | m1 | 100 | | | 100 | HMP EPTBP | 74 | UV | 0.08 | 25 | PE-m | 17 | 59 | 36 | 52 | 110 | 19 | 45 | 120 | >10,000 | 11 |
| | 3 | 1-c3 | m1 | 100 | | | 100 | HMP EPTBP | 74 | | 0.08 | 25 | PP-m | 25 | 41 | 65 | 150 | 120 | 27 | 150 | 120 | >10,000 | 10 |
| | 4 | 1-c4 | m1 | 50 | Xm1 | 50 | 50 | HMP EPTBP | 67 | UV | 0.09 | 29 | PE-m | 7 | 40 | 45 | 190 | 105 | 10 | 190 | 110 | >10,000 | 11 |
| | 5 | 1-c5 | m2 | 50 | m6 | 50 | 100 | HMP EPTBP V-501 | 43 | | 0.40 | 20 | PE-m | 7 | 40 | 45 | 190 | 105 | 9 | 170 | 110 | >10,000 | 10 |
| | 6 | 1-c6 | m3 | 100 | | | 100 | DPPSH | 100 | | 0.45 | 20 | PE-m | 7 | 40 | 45 | 190 | 105 | 10 | 175 | 110 | >10,000 | 9 |
| | 7 | 1-c7 | m4 | 100 | | | 100 | DPPSH | 90 | | 0.30 | 15 | PE-m | 7 | 40 | 45 | 190 | 105 | 10 | 180 | 100 | >10,000 | 7 |
| | 8 | 1-c8 | m1 | 100 | | | 100 | HMP EPTBP | 74 | UV | 0.08 | 25 | PE-f | 35 | 65 | 25,000 | 20 | 30 | 45 | 25 | 30 | >10,000 | 20 |
| | 9 | 1-c9 | m1 | 100 | | | 100 | HMP EPTBP | 10 | UV | 0.08 | 25 | PE-m | 7 | 40 | 45 | 190 | 105 | 9 | 180 | 110 | 800 | 5 |
| | 10 | 1-c10 | m5 | 100 | | | 100 | DPPSH | 90 | | 0.20 | 5 | PE-m | 7 | 40 | 45 | 190 | 105 | 7 | 180 | 110 | >10,000 | 2 |
| | 11 | 1-c11 | m1 | 100 | | | 100 | HMP EPTBP | 74 | UV | 0.08 | 25 | PTFE-f | 40 | 65 | 30,000 | 30 | 30 | 45 | 35 | 35 | 1,500 | 5 |

[Table 1-2]

Table 1 (continued)

| | | No. | Hydroxide ion-conductive membrane | | | | | | | | | | | | | | | | | | | | |
|---|---|---|---|---|---|---|---|---|---|---|---|---|---|---|---|---|---|---|---|---|---|---|---|
| | | | Hydroxide ion-conductive polymer | | | | | | | | | | Porous substrate | | | | | | Properties of hydroxide ion-conductive membrane | | | | |
| | | | Monomer 1 | | Monomer 2 | | Proportion of constituent component (I) | Polymerization initiator | Solids content | Polymerization method | Ratio of heteroatom | Water retention capacity | Component | Thickness | Porosity | Pore diameter | Tensile strength | Breaking elongation | Thickness | Tensile strength | Breaking elongation | Air permeability | Water retention capacity |
| | | | Type | Ratio (% by mole) | Type | Ratio (% by mole) | % by mole | | (% by mass) | | | (%) | | (μm) | (%) | nm | (MPa) | (%) | (mm) | (MPa) | (%) | (Seconds) | (%) |
| Example | 12 | 1-c12 | m7 | 100 | | | 100 | DPPSH | 100 | | 0.45 | 27 | PE-m | 17 | 59 | 36 | 52 | 110 | 20 | 45 | 110 | >10,000 | 15 |
| | 13 | 1-c13 | m8 | 100 | | | 100 | HMP EPTBP | 74 | UV | 0.08 | 28 | PE-m | 17 | 59 | 36 | 52 | 110 | 21 | 55 | 115 | >10,000 | 10 |
| | 14 | 1-c14 | m9 | 100 | | | 100 | HMP EPTBP | 74 | UV | 0.08 | 28 | PE-m | 17 | 59 | 36 | 52 | 110 | 21 | 50 | 115 | >10,000 | 11 |
| | 15 | 1-c15 | m10 | 100 | | | 100 | HMP EPTBP | 74 | UV | 0.17 | 20 | PE-m | 17 | 59 | 36 | 52 | 110 | 21 | 50 | 120 | >10,000 | 9 |
| | 16 | 1-c16 | m11 | 100 | | | 100 | DPPSH | 100 | | 0.46 | 18 | PE-m | 17 | 59 | 36 | 52 | 110 | 20 | 50 | 110 | >10,000 | 10 |
| Comparative Example | 1 | c-x1 | m1 | 40 | Xm1 | 60 | 40 | HMP EPTBP | 80 | UV | 0.09 | 25 | PE-m | 7 | 40 | 45 | 190 | 105 | 10 | 195 | 110 | >10,000 | 5 |
| | 2 | c-x2 | m1 | 100 | | | 100 | HMP EPTBP | 80 | UV | 0.08 | 25 | PP-m | 50 | 41 | 64 | 150 | 120 | 60 | 155 | 125 | >10,000 | 10 |
| | 3 | c-x3 | Xm2 | 10 | Xm1 | 90 | 0 | HMP EPTBP | 100 | UV | 0.10 | 30 | PE-m | 7 | 40 | 45 | 190 | 105 | 10 | 195 | 100 | >10,000 | 20 |
| | 4 | c-x4 | m1 | 100 | | | 100 | HMP EPTBP | 80 | UV | 0.08 | 25 | none | | | | | | 50 | 20 | 5 | >10,000 | 25 |

<Note in tables>

"-": indicates that the component was not used.

HMP: 2-hydroxy-2-methylpropiophenone (manufactured by Tokyo Chemical Industry Co., Ltd.)
EPTBP: ethyl (2,4,6-trimethylbenzoyl)phenylphosphinate (manufactured by Tokyo Chemical Industry Co., Ltd.)
DPPSH: diphenyl[4-(phenylthio)phenyl]sulfonium hexafluorophosphate (manufactured by Tokyo Chemical Industry Co., Ltd.)
V-501: 4,4'-azobis(4-cyanobutyric acid) (manufactured by FUJIFILM Wako Pure Chemical Corporation)
Solids content: indicates a solids content in the polymerizable monomer-containing liquid.

Polymerization method: "UV" in a case where the polymerization of the monomer was performed by UV exposure, and "Heat" in a case where the polymerization of the monomer was performed by heating.
Ratio of heteroatom: [total element concentrations (at%) of oxygen element, sulfur element, and nitrogen element]/[carbon element concentration (at%)]
Porous substrate component: "PE-m" in a case where a porous film made of polyethylene was used, "PP-m" in a case where a porous film made of polypropylene was used, "PE-f" in a case where a nonwoven fabric made of polyethylene was used, and "PTFE-f" in a case where a nonwoven fabric made of polytetrafluoroethylene was used. In addition, "none" was described in a case where the porous substrate was not used.

[Table 2]

| | | Membrane electrode assembly | | | Evaluation | | |
|---|---|---|---|---|---|---|---|
| Note | Water electrolysis cell | Anode | Hydroxide ion-conductive membrane | Cathode | Gas permeability | Resistance | Repeated energization durability |
| Example | 101 | 1-a1 | 1-c1 | 1-b1 | B | B | A |
| | 102 | 1-a1 | 1-c2 | 1-b1 | B | C | B |
| | 103 | 1-a1 | 1-c3 | 1-b1 | A | B | A |
| | 104 | 1-a1 | 1-c4 | 1-b1 | C | B | C |
| | 105 | 1-a1 | 1-c5 | 1-b1 | B | C | B |
| | 106 | 1-a1 | 1-c6 | 1-b1 | B | A | A |
| | 107 | 1-a1 | 1-c7 | 1-b1 | B | C | B |
| | 108 | 1-a1 | 1-c8 | 1-b1 | B | B | C |
| | 109 | 1-a1 | 1-c9 | 1-b1 | C | A | B |
| | 110 | 1-a1 | 1-c10 | 1-b1 | B | C | C |
| | 111 | 1-a1 | 1-c11 | 1-b1 | C | C | C |
| | 112 | 1-a1 | 1-c12 | 1-b1 | B | A | A |
| | 113 | 1-a1 | 1-c13 | 1-b1 | B | B | A |
| | 114 | 1-a1 | 1-c14 | 1-b1 | C | B | A |
| | 115 | 1-a1 | 1-c15 | 1-b1 | C | B | A |
| | 116 | 1-a1 | 1-c16 | 1-b1 | C | B | A |
| Comparative Example | c101 | 1-a1 | c-x1 | 1-b1 | D | C | D |
| | c102 | 1-a1 | c-x2 | 1-b1 | B | D | D |
| | c103 | 1-a1 | c-x3 | 1-b1 | B | B | D |
| | c104 | 1-a1 | c-x4 | 1-b1 | B | B | E |

The hydroxide ion-conductive membrane c-x1 of Comparative Example 1 includes a hydroxide ion-conductive

polymer in which a proportion of the constituent component (I) derived from the polyfunctional polymerizable monomer IA in all constituent components of the polymer is 40% by mole, which is not satisfy the definition of the present invention. In a case where the hydroxide ion-conductive membrane was used as the membrane electrode assembly and further used as the water electrolysis cell, the hydrogen gas permeability and the repeated energization durability were deteriorated.

The hydroxide ion-conductive membrane c-x2 of Comparative Example 2 has a thickness of 60 μm, which is not satisfy the definition of the present invention. In a case where the hydroxide ion-conductive membrane was used as the membrane electrode assembly and further used as the water electrolysis cell, the difference in voltage exceeded 0.50 V and the resistance was high. It is considered that this is because the distance between the cathode and the anode is long. In addition, in the repeated energization durability test, the voltage after 500 cycles was about 3% higher than the initial voltage.

In a case where the hydroxide ion-conductive membrane c-x3 of Comparative Example 3 containing a hydroxide ion-conductive polymer having no constituent component (I) derived from the polyfunctional polymerizable monomer IA was used as the membrane electrode assembly and further used as the water electrolysis cell, in the repeated energization durability test, the voltage after 500 cycles was about 3% higher than the initial voltage. It is considered that the hydroxide ion-conductive polymer was decomposed between energization and stop.

The hydroxide ion-conductive membrane c-x4 of Comparative Example 4, which was a membrane consisting of a hydroxide ion-conductive polymer without having a porous substrate, had a breaking elongation of 5% and had poor mechanical strength. In a case where the hydroxide ion-conductive membrane was used as the membrane electrode assembly and further used as the water electrolysis cell, in the repeated energization durability test, a short circuit occurred within 500 cycles and the cell was not operable.

On the other hand, the hydroxide ion-conductive membranes 1-c1 to 1-c16 according to the embodiment of the present invention had a thickness of less than 50 μm, but had a tensile strength of 25 MPa or more, a breaking elongation of 30% or more, excellent mechanical properties, and an air permeability of 800 seconds or more, which is excellent air permeability. Furthermore, in a case where these hydroxide ion-conductive membranes were used as the membrane electrode assembly and further used as the water electrolysis cell, the hydroxide ion-conductive membranes had a gas permeability of less than 1.000 vol% in the hydrogen gas permeability evaluation, a difference in voltage of 0.50 V or less in the resistance evaluation, and a rate of change in voltage of 2% or less in the repeated energization durability evaluation.

Among these, in a case where a larger amount of the constituent component (I) derived from the polyfunctional polymerizable monomer defined in the present invention was contained, the hydrogen gas permeability was further suppressed, the resistance was low, and the repeated energization durability tended to be improved (comparison between Example 1, Example 4, and Comparative Example 1). In Example 1, it is considered that a dense film was formed by including a large amount of a structure having high polarity and by forming a large amount of crosslinking, whereby the permeation of hydrogen gas was suppressed.

Although the present invention has been described with reference to the embodiments, it is the intention of the inventors of the present invention that the present invention should not be limited by any of the details of the description unless otherwise specified and rather be construed broadly within the spirit and scope of the invention appended in the claims.

The present application claims the priority of JP2023-161729A filed in Japan on September 25, 2023, the contents of which are incorporated herein by reference, as a part of the description of the present specification.

Explanation of References

1: hydroxide ion-conductive membrane

2a: anode catalyst layer

21: anode catalyst
23: ionomer resin

2c: cathode catalyst layer

22: cathode catalyst
23: ionomer resin

3: gas diffusion layer
4: membrane electrode assembly
5: bipolar plate
10: water electrolysis cell

## Claims

1. A hydroxide ion-conductive membrane comprising:

   a porous substrate; and
   a hydroxide ion-conductive polymer disposed at least in pores of the porous substrate,
   wherein the hydroxide ion-conductive polymer has a constituent component (I) derived from a polyfunctional polymerizable monomer having a total of two or more atoms of at least one of an oxygen atom, a sulfur atom, or a nitrogen atom in a structural moiety other than a polymerizable group, and a proportion of the constituent component (I) in all constituent components of the hydroxide ion-conductive polymer is 50% by mole or more, and a thickness of the hydroxide ion-conductive membrane is 5 μm or more and less than 50 μm.

2. The hydroxide ion-conductive membrane according to claim 1,
   wherein an element composition in the hydroxide ion-conductive polymer satisfies the following expression (a),

   [total element concentrations (at%) of oxygen element, sulfur element, and nitrogen element]/[carbon element concentration (at%)] $\geq$ 0.05. [expression (a)]

3. The hydroxide ion-conductive membrane according to claim 1,
   wherein a water retention capacity of the hydroxide ion-conductive polymer is 5% by mass or more.

4. The hydroxide ion-conductive membrane according to claim 1,

   wherein the constituent component (I) has any one of the following structural moieties (i) to (viii),

(i)

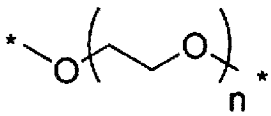

(ii)

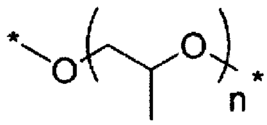

(iii)

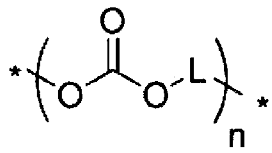

(iv)

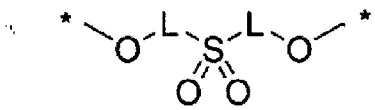

(v)

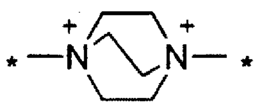

(vi)

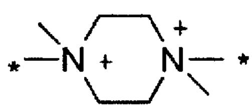

(vii)

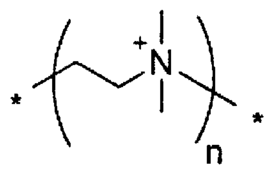

(viii)

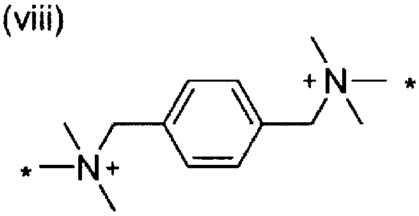

n is an integer of 1 or more,
L represents a single bond, an alkylene group, or an arylene group, and
* indicates a linking site.

**5.** The hydroxide ion-conductive membrane according to claim 4, wherein the constituent component (I) is a nonionic constituent component.

**6.** The hydroxide ion-conductive membrane according to any one of claims 1 to 5, wherein the hydroxide ion-conductive membrane has a tensile strength of 10 MPa or more and a breaking elongation of 100% or more.

**7.** The hydroxide ion-conductive membrane according to claim 6, wherein the hydroxide ion-conductive membrane has an air permeability of 1,000 seconds or more.

**8.** The hydroxide ion-conductive membrane according to claim 7, wherein the porous substrate has a porosity of 40% to 60%.

**9.** The hydroxide ion-conductive membrane according to claim 8, wherein the porous substrate has a tensile strength of 20 MPa or more and a breaking elongation of 100% or more.

**10.** The hydroxide ion-conductive membrane according to claim 9, wherein a constituent material of the porous substrate includes a hydrocarbon polymer.

**11.** A method for producing a hydroxide ion-conductive membrane, the method comprising:

impregnating a porous substrate with a polymerizable monomer-containing liquid containing 50% by mole or more of a polyfunctional polymerizable monomer having a total of two or more atoms of at least one of an oxygen atom, a sulfur atom, or a nitrogen atom in a structural moiety other than a polymerizable group in all monomers; and

subjecting the polyfunctional polymerizable monomer to a polymerization reaction to obtain a hydroxide ion-conductive membrane having a thickness of 5 μm or more and less than 50 μm.

**12.** The method for producing a hydroxide ion-conductive membrane according to claim 11, wherein a solids content in the polymerizable monomer-containing liquid is 30% by mass or more.

**13.** The method for producing a hydroxide ion-conductive membrane according to claim 11 or 12, wherein the porous substrate is surface-modified by corona treatment or plasma treatment.

**14.** A membrane electrode assembly having a structure in which a cathode catalyst layer, the hydroxide ion-conductive membrane according to claim 6, and an anode catalyst layer are laminated in this order.

**15.** A method for producing hydrogen using the membrane electrode assembly according to claim 14.

**16.** A hydrogen production system comprising: the membrane electrode assembly according to claim 14.

FIG. 1

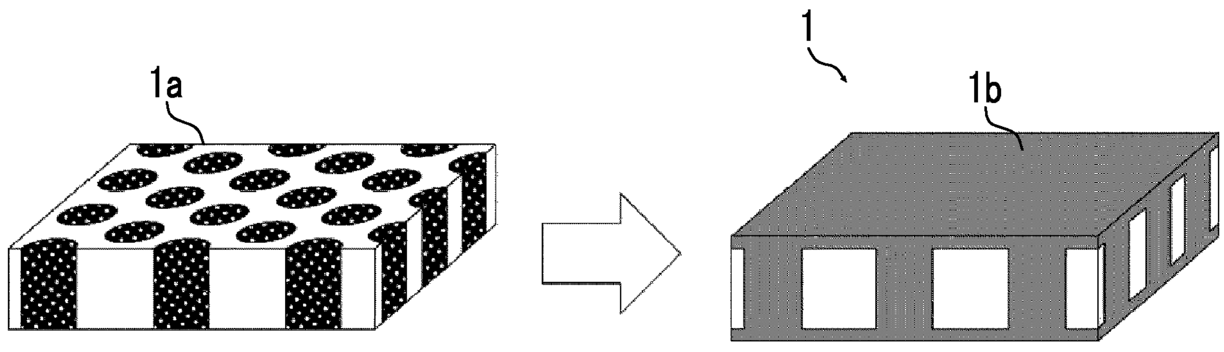


FIG. 2

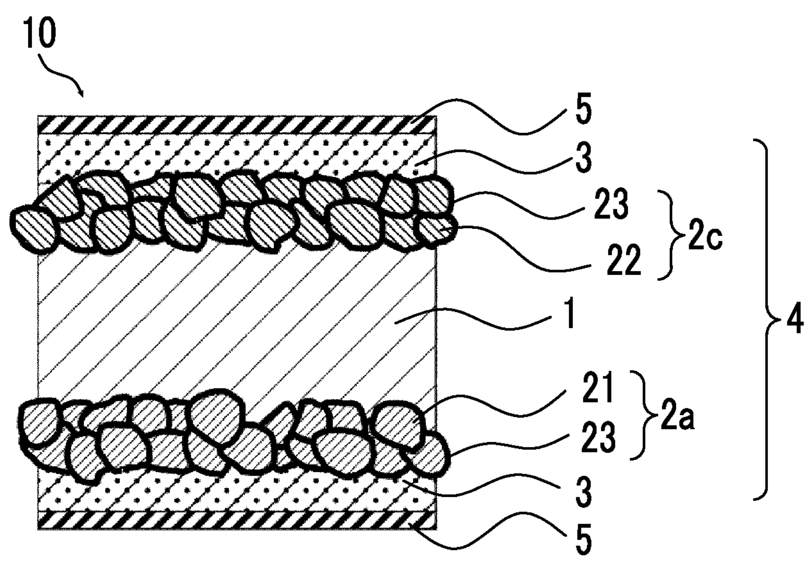

## INTERNATIONAL SEARCH REPORT

International application No.
**PCT/JP2024/033928**

### A. CLASSIFICATION OF SUBJECT MATTER

***C25B 13/08***(2006.01)i; ***C08F 12/34***(2006.01)i; ***C08F 18/00***(2006.01)i; ***C08F 20/18***(2006.01)i; ***C08G 59/02***(2006.01)i; ***C25B 1/04***(2021.01)i; ***C25B 9/00***(2021.01)i; ***C25B 9/23***(2021.01)i; ***C25B 13/04***(2021.01)i; ***H01M 8/103***(2016.01)i; ***H01M 8/1018***(2016.01)i; ***H01M 8/1025***(2016.01)i; ***H01M 8/1058***(2016.01)i; ***H01M 8/1062***(2016.01)i

FI: C25B13/08 301; H01M8/1018; H01M8/1058; H01M8/1025; H01M8/103; H01M8/1062; C25B1/04; C25B9/00 A; C25B9/23; C25B13/04 301; C08F18/00; C08F20/18; C08G59/02; C08F12/34

According to International Patent Classification (IPC) or to both national classification and IPC

### B. FIELDS SEARCHED

Minimum documentation searched (classification system followed by classification symbols)

C25B1/00-9/77; C25B13/00-15/08; H01M8/00-8/0297; H01M8/08-8/2495; C08C19/00-19/44; C08F6/00-246/00; C08F301/00; C08G59/00-59/72

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-176840 A (FUJIFILM CORPORATION) 25 September 2014 (2014-09-25) claims, paragraphs [0033], [0034], [0058], [0096], [0135], examples | 1-4, 6-13 |
| Y | claims, paragraphs [0033], [0034], [0058], [0096], [0135], examples | 14-16 |
| A | claims, paragraphs [0033], [0034], [0058], [0096], [0135], examples | 5 |
| Y | JP 2023-104047 A (PANASONIC INTELLECTUAL PROPERTY MANAGEMENT CO., LTD.) 28 July 2023 (2023-07-28) claims, paragraphs [0058]-[0060], drawings | 14-16 |
| A | WO 2017/022775 A1 (TOKUYAMA CORPORATION) 09 February 2017 (2017-02-09) claims, examples | 1-16 |

☑ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/033928**

**C. DOCUMENTS CONSIDERED TO BE RELEVANT**

| Category* | Citation of document, with indication, where appropriate, of the relevant passages | Relevant to claim No. |
|---|---|---|
| A | JP 2022-553774 A (CENTRE NATIONAL DE LA RECHERCHE SCIENTIFIQUE) 26 December 2022 (2022-12-26) claims, examples | 1-16 |
| A | JP 2019-518809 A (UNIVERSITY OF DELAWARE) 04 July 2019 (2019-07-04) claims, examples | 1-16 |

Form PCT/ISA/210 (second sheet) (July 2022)

**INTERNATIONAL SEARCH REPORT**
**Information on patent family members**

International application No.
**PCT/JP2024/033928**

| Patent document cited in search report | Publication date (day/month/year) | Patent family member(s) | Publication date (day/month/year) |
|---|---|---|---|
| JP 2014-176840 A | 25 September 2014 | US 2015/0353721 A1<br>claims, paragraphs [0067], [0068], [0096], [0165], [0220], examples<br>WO 2014/125942 A1<br>EP 2957588 A1<br>CN 104918986 A | |
| JP 2023-104047 A | 28 July 2023 | (Family: none) | |
| WO 2017/022775 A1 | 09 February 2017 | TW 201716232 A | |
| JP 2022-553774 A | 26 December 2022 | US 2022/0376285 A1<br>claims, examples<br>WO 2021/083922 A1<br>EP 4052316 A1 | |
| JP 2019-518809 A | 04 July 2019 | US 2019/0036143 A1<br>claims, examples<br>WO 2017/172824 A1<br>EP 3436186 A1<br>KR 10-2018-0121961 A<br>CN 109070022 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023104047 A
- JP 2018127506 A
- JP 2022181107 A
- JP 2023161729 A